(19) Europäisches Patentamt / European Patent Office / Office européen des brevets

(11) **EP 2 371 083 B1**

(12) **FASCICULE DE BREVET EUROPEEN**

(45) Date de publication et mention de la délivrance du brevet:
**05.12.2018 Bulletin 2018/49**

(21) Numéro de dépôt: **09803871.4**

(22) Date de dépôt: **16.12.2009**

(51) Int Cl.:
*H04L 9/32* (2006.01)   *H04L 9/30* (2006.01)
*H04L 9/08* (2006.01)

(86) Numéro de dépôt international:
**PCT/FR2009/052562**

(87) Numéro de publication internationale:
**WO 2010/076498 (08.07.2010 Gazette 2010/27)**

(54) **SIGNATURE DE GROUPE A VÉRIFICATION LOCALE DE RÉVOCATION AVEC CAPACITÉ DE LEVÉE D'ANONYMAT**

GRUPPENSIGNATUR MIT LOKALER WIEDERRUFVERIFIKATION MIT KAPAZITÄT ZUM AUFHEBEN DER ANONYMITÄT

GROUP SIGNATURE WITH LOCAL REVOCATION VERIFICATION WITH CAPACITY FOR LIFTING ANONYMITY

(84) Etats contractants désignés:
**AT BE BG CH CY CZ DE DK EE ES FI FR GB GR HR HU IE IS IT LI LT LU LV MC MK MT NL NO PL PT RO SE SI SK SM TR**

(30) Priorité: **30.12.2008 FR 0859109**

(43) Date de publication de la demande:
**05.10.2011 Bulletin 2011/40**

(73) Titulaire: **Orange**
**75015 Paris (FR)**

(72) Inventeurs:
• **CANARD, Sébastien**
**F-14000 Caen (FR)**
• **DELERABLEE, Cécile**
**F-75017 Paris (FR)**

(74) Mandataire: **Cabinet Plasseraud**
**66, rue de la Chaussée d'Antin**
**75440 Paris Cedex 09 (FR)**

(56) Documents cités:
• RUPENG LI ET AL: "Key-Insulated Group Signature Scheme with Verifier-Local Revocation" SOFTWARE ENGINEERING, ARTIFICIAL INTELLIGENCE, NETWORKING, AND PARALLEL/DISTRIBUTED COMPUTING, 2007. SNPD 2007. EIGHTH ACIS INTERNATIONAL CONFERENCE ON, IEEE, PISCATAWAY, NJ, USA, 1 juillet 2007 (2007-07-01), pages 273-278, XP031125089 ISBN: 978-0-7695-2909-7
• ZHANG J ET AL: "MORE EFFICIENT VLR GROUP SIGNATURE SATISFYING EXCULPABILITY" IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E91A, no. 7, 1 juillet 2008 (2008-07-01), pages 1831-1835, XP001515509 ISSN: 0916-8508
• NAKANISHI T ET AL: "VERIFIER-LOCAL REVOCATION GROUP SIGNATURE SCHEMES WITH BACKWARD UNLINKABILITY FROM BILINEAR MAPS" IEICE TRANSACTIONS ON FUNDAMENTALS OF ELECTRONICS,COMMUNICATIONS AND COMPUTER SCIENCES, ENGINEERING SCIENCES SOCIETY, TOKYO, JP, vol. E90A, no. 1, 1 janvier 2007 (2007-01-01), pages 65-74, XP001505059 ISSN: 0916-8508 cité dans la demande

EP 2 371 083 B1

- ZHOU SUJING, LIN DONGDAI: "A Shorter Group Signature with Verifier-Location Revocation and Backward Unlinkability"[Online] 23 septembre 2006 (2006-09-23), pages 1-13, XP002554943 Extrait de l'Internet: URL:http://eprint.iacr.org/2006/100> [extrait le 2009-11-11]
- BONEH D ET AL: "Group Signatures with Verifier-Local Revocation" PROCEEDINGS OF THE 11TH ACM CONFERENCE ON COMPUTER AND COMMUNICATIONS SECURITY : WASHINGTON, DC, USA, OCTOBER 25 - 29, 2004; [ACM CONFERENCE ON COMPUTER AND COMMUNICATIONS SECURITY], NEW YORK, NY : ACM PRESS, 25 octobre 2004 (2004-10-25), pages 168-177, XP007905322 ISBN: 978-1-58113-961-7 cité dans la demande
- REN W., REN K., LOU W., ZHANG Y.: "Efficient User Revocation for Privacy-aware PKI" THE FIFTH INTERNATIONAL ICST CONFERENCE ON HETEROGENEOUS NETWORKING FOR QUALITY, RELIABILITY, SECURITY AND ROBUSTNESS (QSHINE 2008), [Online] 31 juillet 2008 (2008-07-31), pages 1-7, XP002554942 Hong Kong Extrait de l'Internet: URL:web.njit.edu/wins/files/ren-Qshine08.p df> [extrait le 2009-11-11]

**Description**

Le présent document concerne un procédé cryptographique et plus particulièrement les techniques de signature de groupe à vérification locale de révocation, désignées par l'acronyme VLR ("Verifier-Local Revocation").

Un schéma de signature de groupe permet aux membres de signer des messages anonymement au nom du groupe. Une personne examinant la signature peut alors obtenir l'assurance que le signataire est membre du groupe, sans pour autant pouvoir identifier de quel membre il s'agit. Il est souvent fait en sorte qu'une autorité habilitée soit néanmoins capable, en cas de besoin, de lever l'anonymat de toute signature.

Pour permettre la révocation d'un membre du groupe, le schéma doit être complété par des mécanismes permettant d'empêcher un membre de signer à la suite de cette révocation. Il existe principalement deux techniques:

- l'une nécessitant une mise à jour des clés de tous les membres non révoqués et de la clé publique du système,
- l'autre obligeant le vérifieur à tester si une signature donnée a été générée à partir d'une clé révoquée ou non. Une liste de révocation contient alors des éléments caractérisant l'ensemble de ces clés révoquées.

Dans certains contextes, il n'est pas souhaitable d'obliger les utilisateurs à se connecter régulièrement à la base des éléments publics afin de mettre à jour leurs clés, cette opération pouvant être coûteuse en calculs.

La seconde technique, appelée signature de groupe à vérification locale de révocation (VLR) est considérée plus particulièrement ici. Elle met typiquement en jeu des algorithmes ayant les fonctionnalités suivantes:

- génération de clés, à savoir clé publique partagée par tous les protagonistes du schéma, clés privées respectives des différents membres du groupe de signataires, clé secrète du gestionnaire du groupe et clé secrète du gestionnaire de révocation;

- signature, permettant à chaque membre ayant une clé privée de signer anonymement pour le groupe;

- révocation, permettant à un gestionnaire de révocations d'ajouter un membre à la liste des membres révoqués;

- vérification de signature, permettant à quiconque disposant de la clé publique de s'assurer qu'une signature donnée émane bien d'un membre non révoqué du groupe de signataires (sans pouvoir déterminer lequel);

- ouverture de signature...

Une technique VLR de signature de groupe sans capacité de lever l'anonymat a été introduite par Boneh et Shacham dans "Group Signatures with Verifier-Local Revocation", Proceedings of the 11th ACM Conférence on Computer and Communications Security, Washington DC, USA, ACM, 2004, pp. 168-177. Outre l'absence de levée d'anonymat (propriété pourtant souhaitable dans de nombreux cas), ce système a pour limitation de ne pas vérifier la propriété de conservation d'anonymat des signatures antérieures ("backward unlinkability"). Cette propriété de conservation d'anonymat assure que la révocation d'un membre ne compromet pas l'anonymat de toutes les signatures antérieures de ce membre. Cette propriété est souvent souhaitable notamment lorsque le membre révoqué est honnête.

Dans "Verifier-Local Revocation Group Signature Schemes with Backward Unlinkability from Bilinear Maps", IEICE Transactions on Fundamentals of Electronics, Communications and Computer Sciences, 2007, E90-A(1), pp. 65-74, Nakanishi et Funabiki ont proposé une variante où le temps est divisé en périodes dont le nombre est fixé à la création du système. A chaque période correspond un élément dans la clé publique du système (nécessaire pour produire une signature), et à chaque membre révoqué correspond autant d'éléments dans la liste de révocation qu'il y a de périodes. Cette technique, qui ne comporte pas non plus de levée d'anonymat, présente l'inconvénient qu'une clé révoquée peut continuer à être utilisée pour produire des signatures de groupe tant que la période en cours n'est pas terminée. Il est donc nécessaire de faire un compromis entre la durée d'une période et la taille des éléments publics et de la liste de révocation.

Aucune technique actuelle ne procure une propriété forte de conservation de secret, selon laquelle un adversaire accédant à la clé privée d'un membre du groupe de signataires est incapable de déterminer quelles sont les signatures exécutées par ce membre.

Dans "Shorter Verifier-Local Revocation Group Signatures From Bilinear Maps" (Lecture Notes in Computer Science, Cryptology and Network Security, Volume 4301, 2006, pp. 126-143), Zhou et Lin ont présenté un schéma VLR de signature de groupe permettant une levée d'anonymat. Un gestionnaire de levée d'anonymat, détenteur d'une autre clé secrète, est alors capable de révéler en partie la clé privée du membre qui a signé un message donné. Le mécanisme d'ouverture ou de levée d'anonymat requiert dans cet article une recherche exhaustive parmi les membres du groupe, ce qui rend ce système peu attractif.

Le présent document vise à offrir un système cryptographique ayant une propriété forte de conservation de secret. On souhaite en outre qu'il autorise les révocations dans un temps constant sans permettre d'identifier ensuite les signatures du membre révoqué.

Il est proposé un procédé cryptographique utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier. Suivant ce procédé, le temps est subdivisé en périodes successives d'index j = 0, 1, 2, etc. Une clé publique a des composantes représentatives d'éléments u et v du groupe $G_1$ et, pour chaque période d'index j, des composantes représentatives d'un entier $s_j$ compris entre 0 et p-1, d'un élément $g_{1,j}$ du groupe $G_1$ et d'éléments $g_{2,j}$, $w_j$ et $h_j$ du groupe $G_2$. Une première clé secrète inclut un entier $\gamma$ compris entre 0 et p-1 tel que $w_j = g_{2,j}{}^\gamma$, $g_{1,0} = g_1{}^{1/(\gamma+s0)}$, $g_{2,0} = g_2{}^{1/(\gamma+s0)}$ et, pour j > 0, $g_{1,j} = g_{1,j-1}{}^{1/(\gamma+sj)}$ et $g_{2,j} = g_{2,j-1}{}^{1/(\gamma+sj)}$. Une deuxième clé secrète inclut un entier ok compris entre 0 et p-1 tel que $v = u^{ok}$. Une troisième clé secrète inclut un entier tk compris entre 0 et p-1 tel que $h_j = g_{2,j}{}^{tk}$. Chaque membre d'un groupe de signataires dispose d'une clé privée ayant une composante représentative d'un entier $x_i$ compris entre 0 et p-1 et, pour chaque période d'index j, une composante représentative d'un élément $A_{i,j}$ du groupe $G_1$ tel que $A_{i,n} = [A_{i,n-1} / g_{1,n-1}]^{1/(X_i-S_n)}$ pour tout index n compris entre 1 et j.

Le procédé cryptographique comprend une procédure de signature dans laquelle ledit membre du groupe de signataires obtient une signature d'un message au cours d'une période d'index j $\geq$ 0, en exécutant les étapes suivantes:

- choisir deux entiers $\alpha$ et $\beta$ compris entre 0 et p-1 ;
- calculer les éléments $T_1 = u^\alpha$ et $T_2 = A_{i,j}.v^\alpha$ du groupe $G_1$ ;
- calculer l'élément $S_1 = g_{2,j}{}^\beta$ du groupe $G_2$;
- calculer l'élément $S_2 = e(A_{i,j}, h_j)^\beta$ du groupe $G_T$;
- calculer en fonction du message des données de preuve justifiant que les éléments $T_1$, $T_2$, $S_1$ et $S_2$ sont bien formés avec la connaissance de la clé privée du membre du groupe de signataires pour la période d'index j; et
- inclure les éléments $T_1$, $T_2$, $S_1$, $S_2$ et les données de preuve dans la signature du message.

Dans un mode de réalisation, l'élément $A_{1,0}$ du groupe $G_1$ est égal à $g_1{}^{1/(\gamma+x_i)}$.

Dans un autre mode de réalisation, il est prévu une procédure d'enregistrement de membres auprès d'une autorité de supervision détenant la première clé secrète. La clé privée d'un membre d'un groupe de signataires a alors des composantes représentatives (1) de $x_i$, (2) d'un autre entier $y_i$ compris entre 0 et p-1 qui n'est connu que du membre qui s'enregistre, et (3) de $A_{i,j}$ avec $A_{1,0} = g_1{}^{1/(\gamma+x_i)} . v^{y_i/(\gamma+x_i)}$.

La troisième clé secrète intervient afin de permettre la révocation des membres du groupe de signataires. Le procédé cryptographique peut ainsi comprendre une procédure de révocation de membres du groupe de signataires par une autorité détenant la troisième clé secrète et tenant à jour une liste de révocation applicable à la période courante et comportant k-1 éléments du groupe $G_1$ après révocation de k-1 membres du groupe de signataires, k étant un entier au moins égal à 1. La révocation au cours d'une période d'index j' d'un k$^{ième}$ membre du groupe de signataires dont la clé privée comporte un élément $A_{i(k),j'}$ du groupe $G_1$ pour la période d'index j' comprend alors l'ajout d'un élément grt[i(k), j'] = $A_{i(k),j'}{}^{tk}$ du groupe $G_1$ à la liste de révocation applicable à la période d'index j'.

Une procédure de changement de liste de révocation par une autorité détenant la première clé secrète peut en outre être prévue pour être exécutée à chaque changement de période de subdivision du temps. Le changement de liste de révocation lors du passage d'une période d'index j"-1 à la période suivante d'index j" pour un entier j" $\geq$ 1 comprend alors, pour tout élément grt[i(ℓ), j"-1] du groupe $G_1$ appartenant à la liste de révocation applicable à la période d'index j"-1, l'inclusion de l'élément grt[i(ℓ),j"] = grt[i(ℓ), j"-1]$^{1/(\gamma+sj")}$ du groupe $G_1$ dans la liste de révocation applicable à la période suivante d'index j".

A l'aide de telles listes de révocation, une procédure de vérification de signature peut être mise en oeuvre par une entité détenant la clé publique. La vérification d'une signature, incluant des éléments $T_1$, $T_2$ du groupe $G_1$ et $S_1$, $S_2$ du groupe $G_2$ et des données de preuve, apposée à un message et présumée obtenue au cours d'une période d'index j tient compte de la liste de révocation applicable à la période d'index j, et comprend les étapes suivantes:

- déterminer que la signature provient d'un membre du groupe de signataires si les données de preuve justifient que les éléments $T_1$, $T_2$, $S_1$ et $S_2$ sont bien formés en fonction du message avec la connaissance d'une clé privée valide pour la période d'index j; et
- accepter la signature comme provenant d'un membre non révoqué du groupe de signataires si e(grt[i(ℓ), j], $S_1$) $\neq$ $S_2$ pour tout élément grt[i(ℓ), j] de la liste de révocation applicable à la période d'index j.

La deuxième clé secrète intervient afin de permettre la levée d'anonymat. Le procédé cryptographique peut ainsi comprendre une procédure de levée d'anonymat du signataire d'un message par une autorité détenant la deuxième clé secrète, la levée d'anonymat à partir d'une signature du message, incluant des éléments $T_1$, $T_2$ du groupe $G_1$,

comprenant le calcul de l'élément $A = T_2.T_1^{-ok}$ du groupe $G_1$.

Un autre aspect de l'invention se rapporte à un dispositif cryptographique pour la mise en oeuvre du procédé ci-dessus, utilisant un schéma cryptographique en référence à des groupes cycliques $G_1$, $G_2$ et $G_T$ d'ordre $p$, à deux éléments générateurs respectifs $g_1$ et $g_2$ des groupes $G_1$ et $G_2$ et à une application bilinéaire $e(.,.)$ de $G_1 \times G_2$ dans $G_T$, où $p$ désigne un nombre premier, le temps étant subdivisé en périodes successives d'index $j = 0, 1, 2$, etc. Une clé publique $(gpk_j)$ a des composantes représentatives d'éléments $u$ et $v$ du groupe $G_1$ et, pour chaque période d'index $j$, des composantes représentatives d'un entier $s_j$ compris entre 0 et $p-1$, d'un élément $g_{1,j}$ du groupe $G_1$ et d'éléments $g_{2,j}$, $w_j$ et $h_j$ du groupe $G_2$. Une clé privée d'un membre d'un groupe de signataires détenteur dudit dispositif cryptographique a une composante représentative d'un entier $x_i$ compris entre 0 et $p-1$ et, pour chaque période d'index $j$, une composante représentative d'un élément $A_{i,j}$ du groupe $G_1$ tel que $A_{i,n} = [A_{i,n-1} / g_{1,n-1}]^{1/(x_i-s_n)}$ pour tout index $n$ compris entre 1 et $j$. Le dispositif cryptographique comprend un calculateur pour obtenir une signature d'un message au cours d'une période d'index $j \geq 0$, en choisissant deux entiers $\alpha$ et $\beta$ compris entre 0 et $p-1$, en calculant les éléments $T_1 = u^\alpha$ et $T_2 = A_{i,j}.v^\alpha$ du groupe $G_1$, l'élément $S_1 = g_2$ du groupe $G_2$, l'élément $S_2 = e(A_{i,j}, h_j)^\beta$ du groupe $G_T$ et, en fonction du message, des données de preuve justifiant que les éléments $T_1$, $T_2$, $S_1$ et $S_2$ sont bien formés avec la connaissance de la clé privée du membre du groupe de signataires pour la période d'index $j$, la signature du message incluant les éléments $T_1$, $T_2$, $S_1$, $S_2$ et les données de preuve.

Un autre aspect encore de l'invention se rapporte à une unité cryptographique utilisant un schéma cryptographique tel que présenté ci-dessus et comprenant un gestionnaire de liste de révocation pour tenir à jour une liste de révocation applicable à la période courante à l'aide d'une clé secrète, à savoir la troisième clé secrète. Le gestionnaire de liste de révocation comprend un calculateur pour recevoir, au cours d'une période d'index $j'$, une liste de révocation comportant $k-1 \geq 0$ éléments du groupe $G_1$ et une requête de révocation d'un $k^{\text{ième}}$ membre du groupe de signataires dont la clé privée comporte un élément $A_{i(k),j'}$ du groupe $G_1$ pour la période d'index $j'$, $k$ étant un entier au moins égal à 1, et pour produire une liste de révocation mise à jour applicable à la période d'index $j'$, où a été ajouté l'élément $grt[i(k), j'] = A_{i(k),j'}^{tk}$ du groupe $G_1$.

Un autre aspect encore de l'invention se rapporte à une unité cryptographique utilisant un schéma cryptographique tel que présenté ci-dessus et comprenant un autre gestionnaire de liste de révocation pour former une liste de révocation applicable à une nouvelle période d'index $j''$ à l'aide d'une clé secrète, à savoir la première clé secrète, et à partir d'une liste de révocation applicable à la période précédente d'index $j''-1$, $j''$ étant un entier au moins égal à 1. La liste de révocation applicable à la nouvelle période d'index $j''$ comprend un élément respectif $grt[i(\ell), j''] = grt[i(\ell), j''-1]^{1/(\gamma+s_{j''})}$ du groupe $G_1$ pour tout élément $grt[i(\ell), j''-1]$ du groupe $G_1$ appartenant à la liste de révocation applicable à la période précédente d'index $j''-1$.

Un autre aspect encore de l'invention se rapporte à un dispositif de vérification de signatures produites en utilisant un schéma cryptographique tel que présenté ci-dessus. Le dispositif de vérification a accès à la clé publique pour une période d'index $j$ ainsi qu'à une liste de révocation applicable à la période d'index $j$ et composée de $k$ éléments $grt[i(\ell), j]$ du groupe $G_1$, $k$ étant un entier positif ou nul. Il comprend un calculateur pour recevoir une signature, incluant des éléments $T_1$, $T_2$ du groupe $G_1$ et $S_1$, $S_2$ du groupe $G_2$ et des données de preuve, apposée à un message et présumée obtenue au cours d'une période d'index $j$, pour déterminer que ladite signature provient d'un membre du groupe de signataires si les données de preuve justifient que les éléments $T_1$, $T_2$, $S_1$ et $S_2$ sont bien formés en fonction du message avec la connaissance d'une clé privée valide pour la période d'index $j$, et pour accepter la signature comme provenant d'un membre non révoqué du groupe de signataires si $e(grt[i(\ell), j], S_1) \neq S_2$ pour tout élément $grt[i(\ell), j]$ de la liste de révocation applicable à la période d'index $j$.

Un autre aspect encore de l'invention se rapporte à une unité cryptographique utilisant un schéma cryptographique tel que présenté ci-dessus et comprenant un serveur de levée d'anonymat à l'aide d'une clé secrète, à savoir la deuxième clé secrète, pour recevoir une signature d'un message, incluant des éléments $T_1$, $T_2$ du groupe $G_1$, et produire l'élément $A = T_2.T_1^{-ok}$ du groupe $G_1$.

Selon d'autres aspects encore, des programmes d'ordinateur sont proposés pour des dispositifs et unités cryptographiques tels que définis ci-dessus. Ces programmes comprennent des instructions pour exécuter les étapes de la procédure de signature, de la procédure de révocation, de la procédure de changement de liste de révocation, de la procédure de vérification de signature, et de la procédure de levée d'anonymat des procédés cryptographiques lors de leur exécution par une unité de traitement du dispositif ou de l'unité cryptographique.

D'autres particularités et avantages de la présente invention apparaîtront dans la description ci-après d'exemples de réalisation non limitatifs, en référence aux dessins annexés, dans lesquels :

- la figure 1 est un schéma d'ensemble illustrant des entités mises en jeu dans un procédé VLR de signature de groupe avec capacité de levée d'anonymat;
- les figures 2 à 9 sont des schémas illustrant les entrées et sorties de ces entités dans différentes phases du procédé cryptographique; et
- la figure 10 est un diagramme illustrant une procédure d'enregistrement de signataires dans un mode de réalisation du procédé cryptographique.

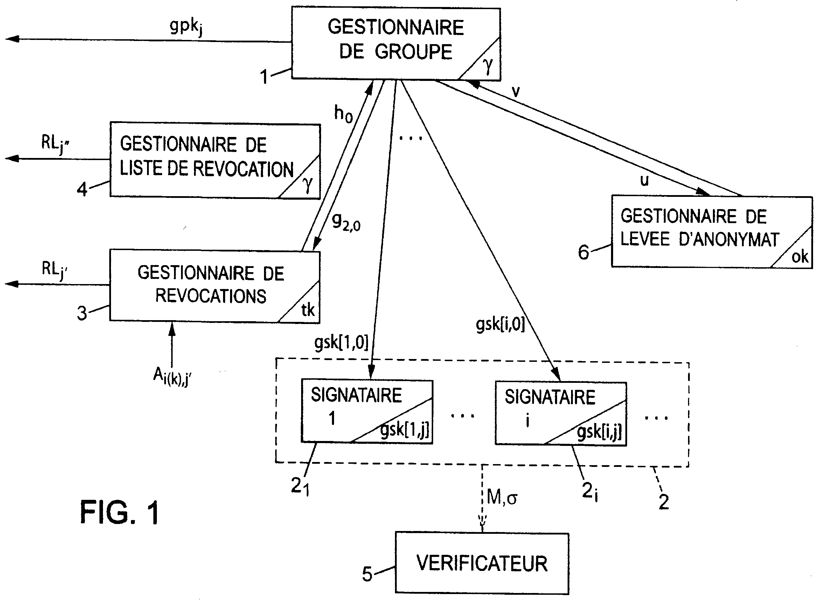

Le procédé cryptographique illustré en référence à la figure 1 met en jeu quatre autorités qui, dans l'exemple représenté, utilisent quatre unités cryptographiques distinctes 1, 3, 4 et 6:

- une autorité de supervision d'un ou plusieurs groupes de signataires, dont l'unité 1 incorpore un gestionnaire de groupe stockant de manière secrète une clé de base $\gamma$,

- une autorité de révocation de membres d'un ou plusieurs groupes de signataires, dont l'unité 3 incorpore un gestionnaire de révocations stockant de manière secrète une clé de révocation tk;

- une autorité de mise à jour des listes de révocation, dont l'unité 4 incorpore un gestionnaire de listes de révocation stockant de manière secrète la clé de base $\gamma$,

- une autorité de levée d'anonymat des signataires de messages, dont l'unité 6 incorpore un serveur de levée d'anonymat stockant de manière secrète une clé de levée d'anonymat ok.

En pratique, plusieurs de ces autorités peuvent être regroupées dans une même unité. Typiquement, les autorités de supervision de groupes et de mise à jour des listes de révocation appartiennent à la même unité afin de ne conserver la clé $\gamma$ qu'à un seul endroit. A la limite, les quatre unités 1, 3, 4, 6 représentées sur la figure 1 pourraient n'en constituer qu'une seule.

La figure 1 montre également un groupe de signataires 2 dont les membres détiennent des dispositifs cryptographiques $2_1$, ..., $2_i$, ... stockant chacun une clé privée respective gsk[1,j], ..., gsk[i, j], ... Les clés privées gsk[i, j] des utilisateurs sont indexées par un entier j qui dénote des périodes de temps successives prises en compte dans le schéma cryptographique (j = 0,1, 2, etc.).

Un ou plusieurs dispositifs 5 n'ayant accès qu'à des paramètres publics sont en mesure de vérifier des signatures $\sigma$ apposées à des messages M par des membres du groupe 2. La vérification porte sur la validité de la signature et sur la non-révocation de son auteur.

Le gestionnaire de groupe 1 est responsable de la génération et de la publication de la clé publique $gpk_j$ relative à chaque période d'index j de la subdivision du temps. S'il est mis en oeuvre dans la même unité que l'autorité de révocation 3 et l'autorité de levée d'anonymat 6, le gestionnaire de groupe 1 génère également les clés secrètes tk et ok des autorités de révocation de membres et de levée d'anonymat. Le gestionnaire de groupe 1 génère enfin les clés privées respectives gsk[1, 0], ..., gsk[i, 0], ... des membres du groupe pour la période d'index j = 0 et les distribue à ces membres.

Le schéma cryptographique employé fait référence à trois groupes cycliques $G_1$, $G_2$ et $G_T$ (deux ou trois d'entre eux pouvant éventuellement être confondus). Les groupes cycliques $G_1$, $G_2$ et $G_T$ sont d'ordre premier p. On note $g_1$ et $g_2$ deux éléments générateurs respectifs des groupes $G_1$ et $G_2$, reliés entre eux par un isomorphisme $\psi$ ($g_1 = \psi(g_2)$). Le schéma utilise aussi à une application bilinéaire e(.,.) de $G_1 \times G_2$ dans $G_T$. Par bilinéaire, on entend que pour toute paire d'entiers (a, b), tout élément $u_1$ de $G_1$ et tout élément $u_2$ de $G_2$, on a $e(u_1^a, u_2^b) = e(u_1, u_2)^{ab}$. Un exemple possible, parmi d'autres, pour cette application bilinéaire e(., .) est le couplage de Tate.

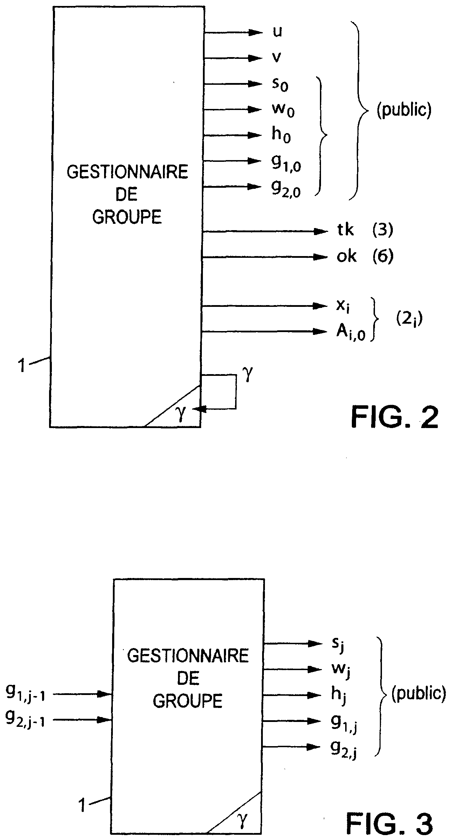

La figure 2 illustre un exemple de génération initiale des clés par le gestionnaire de groupe 1. Le gestionnaire de groupe 1 choisit l'élément $g_2$ dans le groupe $G_2$ et prend $g_1 = \psi(g_2)$. Il choisit également (par exemple au hasard) le nombre entier y entre 0 et p-1 pour constituer la clé de base qu'il conserve secrète.

Pour générer la clé publique $gpk_0 = (u, v, s_0, w_0, h_0, g_{1,0}, g_{2,0})$, relative à la période d'index j = 0, le gestionnaire de groupe 1 choisit encore (par exemple au hasard) un élément u dans le groupe $G_1$ et un nombre entier $s_0$ entre 0 et p-1. Il calcule les éléments $g_{1,0}$ du groupe $G_1$ et $g_{2,0}$, $w_0$ du groupe $G_2$ selon:

$$g_{1,0} = g_1^{1/(\gamma + s_0)}$$

$$g_{2,0} = g_2^{1/(\gamma + s_0)}$$

$$w_0 = g_{2,0}^{\gamma}$$

Le gestionnaire de groupe 1 transmet l'élément $g_{2,0}$ à l'autorité de révocation de membres 3 pour qu'elle calcule

l'élément $h_0$ du groupe $G_2$ selon:

$$h_0 = g_{2,0}{}^{tk}$$

après avoir tiré au hasard le nombre entier tk entre 0 et p-1. L'autorité de révocation 3 conserve de manière secrète sa clé tk et retourne l'élément $h_0$ au gestionnaire de groupe 1 en vue de la publication de la clé publique $gpk_0$.

Le gestionnaire de groupe 1 transmet également l'élément u à l'autorité de levée d'anonymat 6 pour qu'elle calcule l'élément v du groupe $G_1$ selon:

$$v = u^{ok}$$

après avoir tiré au hasard le nombre entier ok entre 0 et p-1. L'autorité de levée d'anonymat 6 conserve de manière secrète sa clé ok et retourne l'élément v au gestionnaire de groupe 1 en vue de la publication de la clé publique $gpk_0$.

Les paramètres u et v de la clé publique $gpk_0$ sont permanents, tandis que les autres paramètres $s_0$, $w_0$, $h_0$, $g_{1,0}$ et $g_{2,0}$ seront mis à jour à chaque nouvelle période d'index j > 0. Pour cela (figure 3), le gestionnaire de groupe 1 tire un nouvel entier $s_j$ entre 0 et p-1 puis calcule les éléments $g_{1,j}$ du groupe $G_1$ et $g_{2,j}$, $w_j$ et $h_j$ du groupe $G_2$ selon:

$$g_{1,j} = g_{1,j-1}{}^{1/(\gamma+s_j)}$$

$$g_{2,j} = g_{2,j-1}{}^{1/(\gamma+s_j)}$$

$$w_j = g_{2,j}{}^{\gamma}$$

$$h_j = g_{2,j}{}^{tk}$$

La nouvelle clé publiée pour la période d'index j est alors $gpk_j = (u, v, s_j, w_j, h_j, g_{1,j}, g_{2,j})$. La durée des périodes j peut être quelconque. Elle est par exemple décidée par le gestionnaire de groupe 1.

Pour générer la clé privée $gsk[i, 0] = (x_i, A_{i,0})$ d'un membre i relativement à la période d'index j = 0, le gestionnaire de groupe 1 tire (par exemple au hasard) un entier $x_i$ entre 0 et p-1 et calcule l'élément $A_{i,0} = g1^{1/(\gamma+x_i)}$ du groupe $G_1$ Pour chaque période d'index j > 0, la clé privée devient $gsk[i, j] = (x_i, A_{i,j})$, où l'élément $A_{i,j}$ du groupe $G_1$ est donné par:

$$A_{i,j} = [A_{i,j-1} / g_{1,j-1}]^{1/(x_i-s_j)} \qquad\qquad (1)$$

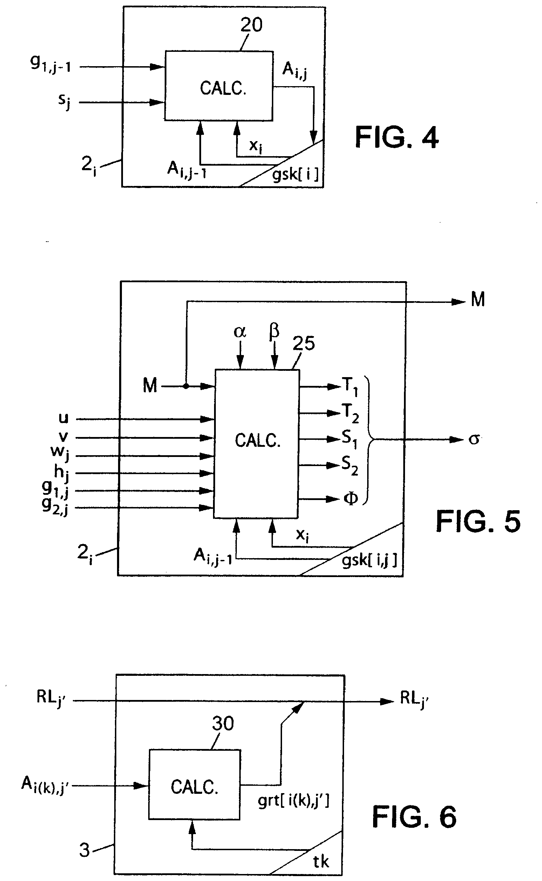

Après distribution de la clé initiale $gsk[i, 0] = (x_i, A_{i,0})$, le dispositif cryptographique $2_i$ du membre disposant des clés publiques successives $gpk_0$, ..., $gpk_j$ (ou au moins de $g_{1,0}$, ..., $g_{1,j-1}$ et de $s_1$, ..., $s_j$) est ainsi capable d'obtenir sa clé privée $gsk[i, j] = (x_i, A_{i,j})$ quelle que soit l'index de période j, par le processus illustré par la figure 4 où le calculateur 20 applique la récurrence $A_{i,n} = [A_{i,n-1} / g_{1,n-1}]^{1/(x_i-s_n)}$ à chaque nouvelle période d'index entier n ≥1 jusqu'à j.

La signature d'un message M, généré localement dans le dispositif cryptographique $2_i$ d'un membre ou reçu de l'extérieur, peut se dérouler comme illustré par la figure 5. Dans un premier temps, le calculateur 25 du dispositif $2_i$ chiffre la valeur de l'élément $A_{i,j}$ de la clé privée du membre signataire relatif à la période j où a lieu la signature par une technique de chiffrement recherchable et déchiffrable pour produire un cryptogramme $(T_1, T_2, S_1, S_2)$. Ensuite, le calculateur 25 calcule des données de preuve $\Phi$ en fonction du message M pour justifier que le cryptogramme $(T_1, T_2, S_1, S_2)$ est bien formé avec la connaissance de la clé privée $gsk[i, j] = (x_i, A_{i,j})$ du membre pour la période de signature d'index j. Les données de preuve $\Phi$ consistent avantageusement en une preuve de connaissance à divulgation nulle de connaissance (ZKPOK).

Le cryptogramme $(T_1, T_2, S_1, S_2)$ est composé de deux éléments $T_1$, $T_2$ du groupe $G_1$, d'un élément $S_1$ du groupe $G_2$ et d'un élément $S_2$ du groupe $G_T$ que le dispositif cryptographique $2_i$ calcule après avoir tiré au hasard deux entiers $\alpha$ et $\beta$ entre 0 et p-1, selon:

$$T_1 = u^\alpha$$

$$T_2 = A_{i,j} \cdot v^\alpha$$

$$S_1 = g_{2,j}{}^\beta$$

$$S_2 = e(A_{i,j}, h_j)^\beta$$

La ZKPOK tenant lieu de données de preuve $\Phi$ peut être établie de diverses manières bien connues dans les techniques cryptographiques (voir par exemple: "On the Fly Authentication and Signature Schemes Based on Groups of Unknown Order", M. Girault, G. Poupard, J. Stern, Journal of Cryptology, Vol. 19, pp. 463-487, 2006; ou "Efficient Identification and Signatures for Smart Cards", K.P. Schnorr, Crypto '89, Vol. 435, Lecture Notes in Computer Science, pp. 239-252, Springer, 1989). La ZKPOK $\Phi$ peut notamment prouver la connaissance du quintuplet ($x_i$, $z$, $\alpha$, $\beta$, $\delta$), avec $z = x_i . \alpha$ et $\delta = \alpha . \beta$, tel que:

$$T_1 = u^\alpha$$

$$e(T_2, g_{2,j})^{x_i}. \, e(v, w_j)^{-\alpha}. \, e(v, g_{2,j})^{-z} = e(g_{1,j}, g_{2,j}) \, / \, e(T_2, w_j)$$

$$T_1{}^\beta = u^\delta$$

$$S_1 = g_{2,j}{}^\beta$$

$$e(T_2, h_j)^\beta = S_2. \, e(v, h_j)^\delta$$

Un exemple possible, parmi d'autres, consiste pour le calculateur 25 à calculer la ZKPOK en quatre étapes:

(E1) tirer au hasard des entiers $r_{x_i}$, $r_z$, $r_\alpha$, $r_\beta$ et $r_\delta$ entre 0 et p-1;
(E2) calculer les éléments suivants:

- $t_1 = u^{r\alpha}$
- $t_2 = e(T_2, g_{2,j})^{r_{x_i}}. \, e(v, w_j)^{-r_\alpha}. \, e(v, g_{2,j})^{-r_z}$
- $t_3 = T_1{}^{r\beta}/u^{r\delta}$
- $t_4 = g_{2,j}{}^{r\beta}$
- $t_5 = e(T_2, h_j)^{r\beta} \, / \, e(v, h_j)^{r\delta}$

(E3) calculer un condensé c par application d'une fonction de hachage $\mathcal{H}$ à la concaténation des éléments $T_1$, $T_2$, $S_1$, $S_2$, $t_1$, $t_2$, $t_3$, $t_4$, $t_5$ et du message M exprimé en binaire, soit

$$c = \mathcal{H}(T_1 \| \, T_2 \| \, S_1 \| \, S_2 \| \, t_1 \| \, t_2 \| \, t_3 \| \, t_4 \| \, t_5 \| \, M)$$

(E4) calculer les éléments suivants:

- $s_{x_i} = r_{x_i} - c.x_i$

- $s_z = r_z - c.z$

- $s_\alpha = r_\alpha - c.\alpha$

- $s_\beta = r_\beta - c.\beta$

- $s_\delta = r_\delta - c.\delta$

La ZKPOK délivrée par le calculateur 25 du dispositif cryptographique $2_i$ est alors $\Phi = (c, s_{x_i}, s_z, s_\alpha, s_\beta, s_\delta)$. Et la signature $\sigma$ du message M ainsi obtenue est $\sigma = (T_1, T_2, S_1, S_2, \Phi)$.

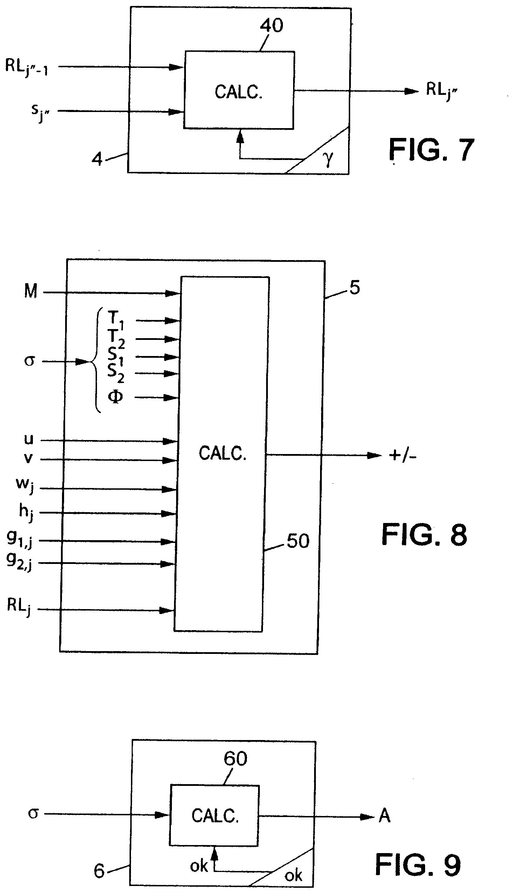

La révocation d'un membre au cours d'une période d'index j' ≥ 0 requiert la connaissance de l'élément $A_{i,j'}$ de sa clé privée en vigueur au cours de la période d'index j'. Elle est effectuée par le gestionnaire de révocations 3 auquel cet élément est soumis par le gestionnaire de groupe 1, par le serveur de levée d'anonymat 6 (qui le détermine par le processus décrit plus loin en référence à la figure 9) ou par le membre i qu'il s'agit de révoquer.

La procédure de révocation est illustrée par la figure 6. Elle ajoute un élément à une liste de révocation $RL_{j'}$ composée d'un certain nombre d'éléments grt[i($\ell$), j'] du groupe $G_1$, Cette liste est vide tant qu'aucun membre n'est révoqué. On note k-1 le nombre de membre révoqué avant la révocation courante (k entier plus grand que zéro). Dans la procédure illustrée par la figure 6, le gestionnaire de révocations 3 reçoit donc une liste $RL_{j'}$ de k-1 éléments grt[i($\ell$), j'] pour $\ell$ = 1, 2, ..., k-1, ainsi que l'élément $A_{i,j'}$ de la clé à révoquer au cours de la période d'index j'. Un calculateur 30 détermine grt[i(k), j'] = $A_{i(k),j'}^{tk}$ et l'ajoute à la liste $RL_{j'}$.

La liste $RL_{j'}$ mise à jour, composée de k éléments, est alors publiée par l'autorité 3 pour que chaque dispositif vérificateur puisse en tenir compte.

Lors d'un changement de période, de l'index j"-1 à l'index j" (j" ≥ 1), on a vu que le gestionnaire de groupe rend disponible une nouvelle clé publique $gpk_{j"}$. Il signale également à l'autorité de mise à jour des listes de révocation qu'il faut former une nouvelle liste $RL_{j"}$ compte tenu du changement de période.

Ceci est effectué par un calculateur 40 de l'unité cryptographique 4 comme illustré par la figure 7. Ce calculateur reçoit la liste $RL_{j"-1}$ qui s'appliquait la période précédente ainsi que le nombre $s_{j"}$ faisant partie de la nouvelle clé publique $gpk_{j"}$. Chaque élément grt[i($\ell$), j"-1] de la liste précédente $RL_{j"-1}$ est remplacé par un nouvel élément grt[i($\ell$), j"] = grt[i($\ell$), j"-1]$^{1/(\gamma+s_{j"})}$ d$_u$ groupe $G_1$ pour former la liste de révocation $RL_{j"}$.

La figure 8 montre le calculateur 50 qui permettra à un dispositif de vérification 5 de vérifier la signature $\sigma$ apposée sur un message M à l'aide du schéma ci-dessus. Outre le message signé (M, $\sigma$), le calculateur 50 dispose de la clé publique $gpk_j = (u, v, s_j, w_j, h_j, g_{1,j}, g_{2,j})$ de la période d'index j au cours de laquelle la signature $\sigma$ est présumée avoir été apposée ainsi que de la liste de révocation $RL_j$ applicable à cette même période (tenant compte le cas échéant des révocations intervenues pendant la période en cours, après intervention du gestionnaire de révocations 3). L'index de période j peut être attaché à la signature $\sigma$ ou déduit d'un horodatage du message M. A défaut, les éléments publics auxquels accède le vérificateur 5 incluent les clés $gpk_j$ et listes $RL_j$ des différentes périodes jusqu'à la période courante afin de balayer les index j.

Dans une première étape de la vérification, le calculateur 50 teste la validité de la signature à l'aide des données de preuve $\Phi$, ce qui revient à rechercher si les données de preuve $\Phi$ justifient que les éléments $T_1, T_2, S_1$ et $S_2$ sont bien formés en fonction du message M avec la connaissance d'une clé privée gsk[i, j] valide pour la période d'index j. La signature $\sigma$ sera reconnue comme provenant d'un membre du groupe 2 si le test est positif. Le test utilise des techniques bien connues pour les ZKPOK telles que celles décrites dans les publications précitées. Dans le cas où la ZKPOK reçue $\Phi = (c, S_{x_i}, s_z, s_\alpha, s_\beta, s_\delta)$ est calculée par les étapes (E1)-(E4) mentionnées ci-dessus, le test peut se dérouler en trois étapes:

(E'1) calculer les éléments suivants:

- $d_1 = T1^c.u^{s_\alpha}$

- $d_2 = [e(g_{1,j}, g_{2,j})^c / e(T_2, w_j)]. e(T_2, g_{2,j})^{s_{x_i}}. e(v, w_j)^{-s_\alpha}. e(v, g_{2,j})^{-s_z}$

- $d_3 = T_1^{s_\beta} / u^{s_\delta}$
- $d_4 = S_1^c.g_{2,j}^{s_\beta}$
- $d_5 = S_2^c.e(T_2, h_j)^{s_\beta} / e(v, h_j)^{s_\delta}$

(E'2) calculer un condensé c' à l'aide de la fonction de hachage $\mathcal{H}$ en prenant en compte le message reçu M, c'est-à-dire selon

$$c' = \mathcal{H}(T_1 \| T_2 \| S_1 \| S_2 \| d_1 \| d_2 \| d_3 \| d_4 \| d_5 \| M)$$

(E'3) conclure à un test positif si c' = c et négatif sinon.

Dans une seconde étape de la vérification, le calculateur 50 examine si le membre (non identifié) du groupe 2 qui a apposé une signature $\sigma$ reconnue valide sur le message M a été ou non révoqué.

Cette seconde étape consiste à considérer successivement les éléments grt[i($\ell$), j] du groupe $G_1$ qui figurent (le cas échéant, c'est-à-dire si k > 0) dans la liste de révocation $RL_j$ pour f = 1, ..., k, et à calculer pour chacun d'eux l'élément $X_\ell$ du groupe $G_T$ selon $X_\ell = e(\text{grt}[i(\ell), j], S_1)$. Si on rencontre le cas $X_\ell = S_2$, on peut conclure que la signature $\sigma$ provient du $\ell^{\text{ième}}$ membre du groupe 2 qui a été révoqué. Si $X_\ell \neq S_2$ pour tous les éléments de la liste de révocation $RL_j$, la signature $\sigma$ peut être acceptée comme provenant d'un membre non révoqué du groupe de signataires 2.

Pour permettre la levée de l'anonymat du signataire d'un message, sous le contrôle de l'autorité habilitée à cet effet, le serveur de levée d'anonymat 6 comporte un calculateur 60 auquel est soumise la signature $\sigma$ de ce message. Il suffit même de lui soumettre les éléments $T_1$ et $T_2$ de cette signature $\sigma$. Le serveur de levée d'anonymat 60 dispose de la clé ok, de sorte que le calculateur 60 peut calculer l'élément $A = T_2.T_1^{-ok}$ du groupe $G_1$.

On peut vérifier que cet élément A, qui constitue la sortie du serveur de levée d'anonymat 6, est égal à l'élément $A_{i,j}$ de la clé privée du membre qui a généré la signature $\sigma$ au cours de la période d'index j. En faisant connaître cet élément $A = A_{i,j}$, on permet au gestionnaire de groupe 1 de révéler quel est le signataire et si nécessaire de demander sa révocation par le gestionnaire 3. On remarque que la seule connaissance de $A = A_{i,j}$ ne suffit pas à un adversaire pour signer à la place du signataire dont l'anonymat a été levé, puisque le paramètre $x_i$ de sa clé privée n'est pas révélé par le serveur 6

Dans le mode de réalisation décrit ci-dessus, l'élément $A_{i,0}$ du groupe $G_1$ appartenant à la clé privée d'un membre i pour la période d'index j = 0 est égal à $g_1^{1/(\gamma+x_i)}$.

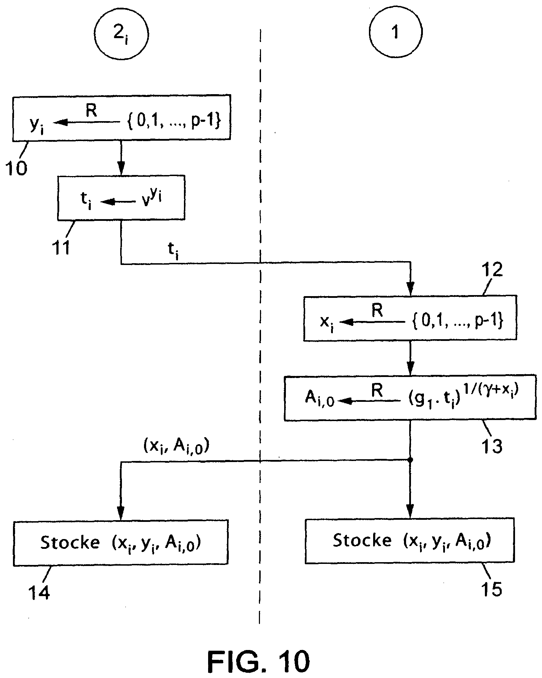

Dans une variante, on prend $A_{i,0} = g_1^{1/(\gamma+x_i)}.v^{y_i/(\gamma+x_i)}$ avec $y_i$ entier choisi par le membre i entre 0 et p-1 lors d'une procédure d'enregistrement telle que celle illustrée par la figure 10.

La procédure d'enregistrement permet aux utilisateurs membres du groupe de signataires de conserver la composante $y_i$ en ne la communiquant à personne. Dans une première étape 10, le dispositif cryptographique $2_j$ du membre tire au hasard l'entier $y_i$ entre 0 et p-1, puis calcule l'élément $t_i = v^{x_i}$ du groupe $G_1$ à l'étape 11. Cet élément $t_i$ est transmis à l'autorité de supervision 1 dans une requête d'enregistrement.

Si l'enregistrement est accepté par l'autorité 1, celle-ci tire au hasard l'entier $x_i$ entre 0 et p-1 à l'étape 12, puis calcule l'élément $A_{i,0} = (g_1.t_i)^{1/(\gamma+x_i)}$ du groupe $G_1$ à l'étape 13. Les paramètres $x_i$, $A_{i,0}$ de la clé privée du membre lui sont transmis par l'autorité 1 afin que celui-ci enregistre sa clé gsk[i, 0] = $(x_i, y_i, A_{i,0})$ pour la période d'index j = 0 à l'étape 14. Il sera ensuite en mesure de la mettre à jour pour les périodes suivantes à l'aide de la récurrence (1).

L'autorité 1 conserve également l'élément $A_{i,0}$ de la clé du membre à l'étape 15, et elle sera capable de mettre à jour cet élément $A_{i,j}$ au cours des périodes suivantes d'index j conformément au fonctionnement de l'autorité 4 de mise à jour de la liste de révocation.

Lorsqu'une procédure d'enregistrement est mise en oeuvre, les procédures de révocation, de formation de la liste de révocation pour une nouvelle période j et de levée d'anonymat sont identiques à celles décrites ci-dessus en référence aux figures 6, 7 et 9. La procédure de signature est adaptée compte tenu du paramètre $y_i$ ajouté à la clé privée. Plus particulièrement, la ZKPOK $\Phi$ est modifiée pour prouver la connaissance du sextuplet $(x_i, y_i, z, \alpha, \beta, \delta)$, avec $z = x_i.\alpha$ et $\delta = \alpha.\beta$, tel que:

$$T_1 = u^\alpha$$

$$e(T_2, g_{2,j})^{x_i}. e(v, w_j)^{-\alpha-y_i}. e(v, g_{2,j})^{-z} = e(g_{1,j}, g_{2,j}) / e(T_2, w_j)$$

$$T_1^\beta = u^\delta$$

$$S_1 = g_{2,j}^\beta$$

$$e(T_2, h_j)^\beta = S_2 \cdot e(v, h_j)^\delta$$

La ZKPOK justifie ainsi que le cryptogramme $T_1 = u^\alpha$, $T_2 = A_{i,j} \cdot v^\alpha$, $S_1 = g_{2,j}^\beta$, $S_2 = e(A_{i,j}, h_j)^\beta$ est bien formé avec la connaissance de la clé privée gsk[i, j] = $(x_i, y_i, A_{i,j})$ du membre pour la période de signature d'index j. Par des techniques de vérification standard, le dispositif de vérification 5 se charge de vérifier la ZKPOK pour valider la signature $\sigma$.

Pour la mise en oeuvre du procédé cryptographique, une réalisation typique consiste à munir les calculateurs 20, 25, 30, 40, 50 et 60 des entités 2, 3, 4, 5 et 6 de programmes, écrits dans des langages informatiques appropriés, dont l'exécution commande les calculs et opérations décrits ci-dessus.

**Revendications**

1. Procédé cryptographique, utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier, le temps étant subdivisé en périodes successives d'index j = 0, 1, 2, etc.,

   dans lequel une clé publique ($gpk_j$) a des composantes représentatives d'éléments u et v du groupe $G_1$ et, pour chaque période d'index j, des composantes représentatives d'un entier $s_j$ compris entre 0 et p-1, d'un élément $g_{1,j}$ du groupe $G_1$ et d'éléments $g_{2,j}$, $w_j$ et $h_j$ du groupe $G_2$,

   dans lequel une première clé secrète inclut un entier $\gamma$ compris entre 0 et p-1 tel que $w_j = g_{2,j}^\gamma$, $g_{1,0} = g_1^{1/(\gamma+s_0)}$, $g_{2,0} = g_2^{1/(\gamma+s_0)}$ et, pour j > 0, $g_{1,j} = g_{1,j-1}^{1/(\gamma+s_j)}$ et $g_{2,j} = g_{2,j-1}^{1/(\gamma+s_j)}$, dans lequel une deuxième clé secrète inclut un entier ok compris entre 0 et p-1 tel que $v = u^{ok}$,

   dans lequel une troisième clé secrète inclut un entier tk compris entre 0 et p-1 tel que $h_j = g_{2,j}^{tk}$,

   dans lequel une clé privée (gsk[i, j]) d'un membre d'un groupe de signataires (2) a une composante représentative d'un entier $x_i$ compris entre 0 et p-1 et, pour chaque période d'index j, une composante représentative d'un élément $A_{i,j}$ du groupe $G_1$ tel que et $A_{i,n} = [A_{i,n-1} / g_{1,n-1}]^{1/(x_i-s_n)}$ pour tout index n compris entre 1 et j,

   le procédé cryptographique comprenant une procédure de signature dans laquelle ledit membre du groupe de signataires obtient une signature ($\sigma$) d'un message (M) au cours d'une période d'index $j \geq 0$, en exécutant les étapes suivantes:

   • choisir deux entiers $\alpha$ et $\beta$ compris entre 0 et p-1;
   • calculer les éléments $T_1 = u^\alpha$ et $T_2 = A_{i,j} \cdot v^\alpha$ du groupe $G_1$;
   • calculer l'élément $S_1 = g_{2,j}^\beta$ du groupe $G_2$;
   • calculer l'élément $S_2 = e(A_{i,j}, h_j)^\beta$ du groupe $G_T$;
   • calculer en fonction du message (M) des données de preuve ($\Phi$) justifiant que les éléments $T_1$, $T_2$, $S_1$ et $S_2$ sont bien formés avec la connaissance de la clé privée (gsk[i, j]) du membre du groupe de signataires pour la période d'index j; et
   • inclure les éléments $T_1$, $T_2$, $S_1$, $S_2$ et les données de preuve ($\Phi$) dans la signature ($\sigma$) du message (M).

2. Procédé cryptographique selon la revendication 1, dans lequel l'élément $A_{i,0}$ de la clé privée dudit membre pour la période d'index j = 0 est égal à $g_1^{1/(\gamma+x_i)}$.

3. Procédé cryptographique selon la revendication 2, dans lequel les données de preuve ($\Phi$) comprennent une preuve de connaissance, à divulgation nulle de connaissance, du quintuplet $(x_i, z, \alpha, \beta, \delta)$ avec $z = x_i \cdot \alpha$ et $\delta = \alpha \cdot \beta$ tel que:

   • $T_1 = u^\alpha$ ;
   • $e(T_2, g_{2,j})^{x_i} \cdot e(v, w_j)^{-\alpha} \cdot e(v, g_{2,j})^{-z} = e(g_{1,j}, g_{2,j}) / e(T_2, w_j)$ ;
   • $T_1^\beta = u^\delta$ ;
   • $s_1 = g_{2,j}^\beta$ ; et
   • $e(T_2, h_j)^\beta = S_2 \cdot e(v, h_j)^\delta$.

4. Procédé cryptographique selon la revendication 1, comprenant en outre une procédure d'enregistrement de membres auprès d'une autorité de supervision (1) détenant la première clé secrète ($\gamma$),

   dans lequel la clé privée (gsk[i, j]) d'un membre d'un groupe de signataires (2) a en outre une composante représentative d'un autre entier $y_i$ compris entre 0 et p-1,

   dans lequel l'enregistrement dudit membre du groupe de signataires (2) comprend:

• la sélection par ledit membre de l'entier $y_i$ compris entre 0 et p-1;
• le calcul par ledit membre d'un élément $t_i = v^{x_i}$ du groupe $G_1$;
• la transmission de l'élément $t_i$ dudit membre à l'autorité de supervision (1);
• la sélection par l'autorité de supervision de l'entier $x_i$ compris entre 0 et p-1;
• le calcul par l'autorité de supervision de l'élément $A_{i,0} = (g_1.t_i)^{1/(\gamma+x_i)}$ du groupe $G_1$; et
• la transmission de l'autorité de supervision audit membre de l'entier $x_i$ et de l'élément $A_{i,0}$.

**5.** Procédé cryptographique selon la revendication 4, dans lequel les données de preuve ($\Phi$) comprennent une preuve de connaissance, à divulgation nulle de connaissance, du sextuplet ($x_i$, $y_i$, z, $\alpha$, $\beta$, $\delta$) avec $z = x_i.\alpha$ et $\delta = \alpha.\beta$ tel que:

• $T_1 = u^\alpha$ ;
• $e(T_2, g_{2,j})^{x_i}. e(v,w_j)^{-\alpha-y_i}. e(v, g_{2,j})^{-z} = e(g_{1,j}, g_{2,j}) / e(T_2, w_j)$ ;
• $T_1^\beta = u^\delta$ ;
• $S_1 = g_{2,j}^\beta$ ; et
• $e(T_2, h_j)^\beta = S_2. e(v, h_j)^\delta$.

**6.** Procédé cryptographique selon l'une quelconque des revendications précédentes, comprenant en outre une procédure de révocation de membres du groupe de signataires (2) par une autorité (3) détenant la troisième clé secrète (tk) et tenant à jour une liste de révocation applicable à la période courante et comportant k-1 éléments du groupe $G_1$ après révocation de k-1 membres du groupe de signataires, k étant un entier au moins égal à 1, dans lequel la révocation au cours d'une période d'index j' d'un $k^{ième}$ membre du groupe de signataires dont la clé privée (gsk[i(k), j']) comporte un élément $A_{i(k),j'}$ du groupe $G_1$ pour la période d'index j' comprend l'ajout d'un élément grt[i(k), j'] = $A_{i(k),j'}^{tk}$ du groupe $G_1$ à la liste de révocation ($RL_{j'}$) applicable à la période d'index j'.

**7.** Procédé cryptographique selon la revendication 6, comprenant en outre une procédure de changement de liste de révocation par une autorité (4) détenant la première clé secrète ($\gamma$) à chaque changement de période de subdivision du temps, dans lequel le changement de liste de révocation lors du passage d'une période d'index j"-1 à la période suivante d'index j" pour un entier j" $\geq$ 1 comprend, pour tout élément grt[i($\ell$), j"-1] du groupe $G_1$ appartenant à la liste de révocation ($RL_{j"-1}$) applicable à la période d'index j"-1, l'inclusion de l'élément grt[i($\ell$), j"] = grt[i($\ell$), j"-1]$^{1/(\gamma+s_{j"})}$ du groupe $G_1$ dans la liste de révocation ($RL_{j"}$) applicable à la période suivante d'index j".

**8.** Procédé cryptographique selon la revendication 7, comprenant en outre une procédure de vérification de signature par une entité détenant la clé publique ($gpk_j$) en tenant compte de la liste de révocation applicable à une période de signature, dans lequel la vérification d'une signature ($\sigma$), incluant des éléments $T_1$, $T_2$ du groupe $G_1$ et $S_1$, $S_2$ du groupe $G_2$ et des données de preuve ($\Phi$), apposée à un message (M) et présumée obtenue au cours d'une période d'index j en tenant compte de la liste de révocation ($RL_j$) applicable à la période d'index j, comprend les étapes suivantes:

• déterminer que la signature ($\sigma$) provient d'un membre du groupe de signataires (2) si les données de preuve ($\Phi$) justifient que les éléments $T_1$, $T_2$, $S_1$ et $S_2$ sont bien formés en fonction du message (M) avec la connaissance d'une clé privée (gsk[i, j]) valide pour la période d'index j; et
• accepter la signature ($\sigma$) comme provenant d'un membre non révoqué du groupe de signataires si $e(grt[i(f), j], S_1) \neq S_2$ pour tout élément grt[i($\ell$), j] de la liste de révocation ($RL_j$) applicable à la période d'index j.

**9.** Procédé cryptographique selon l'une quelconque des revendications précédentes, comprenant en outre une procédure de levée d'anonymat du signataire d'un message (M) par une autorité (6) détenant la deuxième clé secrète (ok), dans lequel la levée d'anonymat à partir d'une signature ($\sigma$) du message (M), incluant des éléments $T_1$, $T_2$ du groupe $G_1$, comprend le calcul de l'élément $A = T_2.T_1^{-ok}$ du groupe $G_1$.

**10.** Dispositif cryptographique, utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier, le temps étant subdivisé en périodes successives d'index j = 0, 1, 2, etc., dans lequel une clé publique ($gpk_j$) a des composantes représentatives d'éléments u et v du groupe $G_1$ et, pour chaque période d'index j, des composantes représentatives d'un entier $s_j$ compris entre 0 et p-1, d'un élément $g_{1,j}$ du groupe $G_1$ et d'éléments $g_{2,j}$, $w_j$ et $h_j$ du groupe $G_2$,

dans lequel une clé privée (gsk[i,j]) d'un membre d'un groupe de signataires (2) détenteur dudit dispositif cryptographique a une composante représentative d'un entier $x_i$ compris entre 0 et p-1 et, pour chaque période d'index j, une composante représentative d'un élément $A_{i,j}$ du groupe $G_1$ tel que $A_{i,n} = [A_{i,n-1} / g_{1,n-1}]^{1/(x_i-s_n)}$ pour tout index n compris entre 1 et j,

le dispositif cryptographique ($2_i$) comprenant un calculateur (25) pour obtenir une signature ($\sigma$) d'un message (M) au cours d'une période d'index j ≥0, en choisissant deux entiers $\alpha$ et $\beta$ compris entre 0 et p-1, en calculant les éléments $T_1 = u^\alpha$ et $T_2 = A_{i,j}.v^\alpha$ du groupe $G_1$, l'élément $S_1 = g_{2,j}{}^\beta$ du groupe $G_2$, l'élément $S_2 = e(A_{i,j}, h_j)^\beta$ du groupe $G_T$ et, en fonction du message (M), des données de preuve ($\Phi$) justifiant que les éléments $T_1$, $T_2$, $S_1$ et $S_2$ sont bien formés avec la connaissance de la clé privée (gsk[i, j]) du membre du groupe de signataires pour la période d'index j, la signature ($\sigma$) du message (M) incluant les éléments $T_1$, $T_2$, $S_1$, $S_2$ et les données de preuve ($\Phi$).

11. Unité cryptographique, utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier, le temps étant subdivisé en périodes successives d'index j = 0, 1, 2, etc.,

dans lequel une clé publique (gpk$_j$) a des composantes représentatives d'éléments u et v du groupe $G_1$ et, pour chaque période d'index j, des composantes représentatives d'un entier $s_j$ compris entre 0 et p-1, d'un élément $g_{1,j}$ du groupe $G_1$ et d'éléments $g_{2,j}$, $w_j$ et $h_j$ du groupe $G_2$,

dans lequel une clé secrète inclut un entier tk compris entre 0 et p-1 tel que $h_j = g_{2,j}{}^{tk}$,

dans lequel une clé privée (gsk[i,j]) d'un membre d'un groupe de signataires (2) a une composante représentative d'un entier $x_i$ compris entre 0 et p-1 et, pour chaque période d'index j, une composante représentative d'un élément $A_{i,j}$ du groupe $G_1$ tel que $A_{i,n} = [A_{i,n-1} / g_{1,n-1}]^{1/(x_i-s_n)}$ pour tout index n compris entre 1 et j, ledit membre du groupe de signataires étant capable de générer une signature ($\sigma$) d'un message (M) au cours d'une période d'index j ≥ 0, la signature ($\sigma$) incluant des éléments $T_1 = u^\alpha$ et $T_2 = A_{i,j}.v^\alpha$ du groupe $G_1$, un élément $S_1 = g_{2,j}{}^\beta$ du groupe $G_2$, un élément $S_2 = e(A_{i,j}, h_j)^\beta$ du groupe $G_T$ et des données de preuve ($\Phi$) dépendant du message (M) et justifiant que les éléments $T_1$, $T_2$, $S_1$ et $S_2$ ont bien été formés avec la connaissance de la clé privée (gsk[i, j]) dudit membre pour la période d'index j, $\alpha$ et $\beta$ étant deux entiers choisis par ledit membre entre 0 et p-1,

l'unité cryptographique comprenant un gestionnaire de révocations (3) pour tenir à jour une liste de révocation applicable à la période courante à l'aide de ladite clé secrète, le gestionnaire de révocations (3) comprenant un calculateur (30) pour recevoir, au cours d'une période d'index j', une liste de révocation (RL$_{j'}$) comportant k-1 ≥ 0 éléments du groupe $G_1$ et une requête de révocation d'un k$^{ième}$ membre du groupe de signataires dont la clé privée (gsk[i(k), j']) comporte un élément $A_{i(k),j'}$ du groupe $G_1$ pour la période d'index j', k étant un entier au moins égal à 1, et pour produire une liste de révocation mise à jour (RL$_{j'}$) applicable à la période d'index j', où a été ajouté l'élément grt[i(k), j'] = $A_{j(k),j'}{}^{tk}$ du groupe $G_1$.

12. Unité cryptographique, utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier, le temps étant subdivisé en périodes successives d'index j = 0, 1, 2, etc.,

dans lequel une clé publique (gpk$_j$) a des composantes représentatives d'éléments u et v du groupe $G_1$ et, pour chaque période d'index j, des composantes représentatives d'un entier $S_j$ compris entre 0 et p-1, d'un élément $g_{1,j}$ du groupe $G_1$ et d'éléments $g_{2,j}$, $w_j$ et $h_j$ du groupe $G_2$,

dans lequel une clé secrète inclut un entier $\gamma$ compris entre 0 et p-1 tel que $w_j = g_{2,j}{}^\gamma$, $g_{1,0} = g_1{}^{1/(\gamma+s_0)}$, $g_{2,0} = g_2{}^{1/(\gamma+s_0)}$ et, pour j > 0, $g_{1,j} = g_{1,j-1}{}^{1/(\gamma+s_j)}$ et $g_{2,j} = g_{2,j-1}{}^{1/(\gamma+s_j)}$,

dans lequel une clé privée (gsk[i, j]) d'un membre d'un groupe de signataires (2) a une composante représentative d'un entier $x_i$ compris entre 0 et p-1 et, pour chaque période d'index j, une composante représentative d'un élément $A_{i,j}$ du groupe $G_1$ tel que $A_{i,n} = [A_{i,n-1} / g_{1,n-1}]^{1/(x_i-s_n)}$ pour tout index n compris entre 1 et j, ledit membre du groupe de signataires étant capable de générer une signature ($\sigma$) d'un message (M) au cours d'une période d'index j ≥ 0, la signature ($\sigma$) incluant des éléments $T_1 = u^\alpha$ et $T_2 = A_{i,j}.v^\alpha$ du groupe $G_1$, un élément $S_1 = g_{2,j}{}^\beta$ du groupe $G_2$, un élément $S_2 = e(A_{i,j}, h_j)^\beta$ du groupe $G_T$ et des données de preuve ($\Phi$) dépendant du message (M) et justifiant que les éléments $T_1$, $T_2$, $S_1$ et $S_2$ ont bien été formés avec la connaissance de la clé privée (gsk[i, j]) dudit membre pour la période d'index j, $\alpha$ et $\beta$ étant deux entiers choisis par ledit membre entre 0 et p-1,

l'unité cryptographique comprenant un gestionnaire de liste de révocation (4) pour former une liste de révocation (RL$_{j''}$) applicable à une nouvelle période d'index j'' à l'aide de ladite clé secrète et à partir d'une liste de révocation (RL$_{j''-1}$) applicable à la période précédente d'index j''-1, j'' étant un entier au moins égal à 1, la liste de révocation applicable à la nouvelle période d'index j'' comprenant un élément respectif grt[i($\ell$),j''] = grt[i($\ell$),j''-1]$^{1/(\gamma+s_{j''})}$ du groupe $G_1$ pour tout élément grt[i($\ell$),j''-1] du groupe $G_1$ appartenant à la liste de révocation (RL$_{j''-1}$) applicable à la période précédente d'index j''-1.

**13.** Dispositif de vérification de signatures produites en utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier, le temps étant subdivisé en périodes successives d'index j = 0, 1, 2, etc.,

dans lequel une clé publique ($gpk_j$) a des composantes représentatives d'éléments u et v du groupe $G_1$ et, pour chaque période d'index j, des composantes représentatives d'un entier $S_j$ compris entre 0 et p-1, d'un élément $g_{1,j}$ du groupe $G_1$ et d'éléments $g_{2,j}$, $w_j$ et $h_j$ du groupe $G_2$,

dans lequel une clé privée (gsk[i, j]) d'un membre d'un groupe de signataires (2) a une composante représentative d'un entier $x_i$ compris entre 0 et p-1 et, pour chaque période d'index j, une composante représentative d'un élément $A_{i,j}$ du groupe $G_1$ tel que $A_{i,n} = [A_{i,n-1} / g_{1,n-1}]^{1/(x_i - s_n)}$ pour tout index n compris entre 1 et j, ledit membre du groupe de signataires étant capable de générer une signature ($\sigma$) d'un message (M) au cours d'une période d'index $j \geq 0$, la signature ($\sigma$) incluant des éléments $T_1 = u^\alpha$ et $T_2 = A_{i,j} \cdot v^\alpha$ du groupe $G_1$, un élément $S_1 = g_{2,j}{}^\beta$ du groupe $G_2$, un élément $S_2 = e(A_{i,j}, h_j)^\beta$ du groupe $G_T$ et des données de preuve ($\Phi$) dépendant du message (M) et justifiant que les éléments $T_1$, $T_2$, $S_1$ et $S_2$ ont bien été formés avec la connaissance de la clé privée (gsk[i, j]) dudit membre pour la période d'index j, $\alpha$ et $\beta$ étant deux entiers choisis par ledit membre entre 0 et p-1,

le dispositif de vérification (5) ayant accès à la clé publique ($gpk_j$) pour une période d'index j ainsi qu'à une liste de révocation ($RL_j$) applicable à la période d'index j et composée de k éléments grt[i($\ell$),j] du groupe $G_1$, k étant un entier positif ou nul,

le dispositif de vérification (5) comprenant un calculateur (50) pour recevoir une signature ($\sigma$), incluant des éléments $T_1$, $T_2$ du groupe $G_1$ et $S_1$, $S_2$ du groupe $G_2$ et des données de preuve ($\Phi$), apposée à un message (M) et présumée obtenue au cours d'une période d'index j, pour déterminer que ladite signature ($\sigma$) provient d'un membre du groupe de signataires si les données de preuve ($\Phi$) justifient que les éléments $T_1$, $T_2$, $S_1$ et $S_2$ sont bien formés en fonction du message (M) avec la connaissance d'une clé privée (gsk[i, j]) valide pour la période d'index j, et pour accepter la signature ($\sigma$) comme provenant d'un membre non révoqué du groupe de signataires si e(grt[i(f), j], $S_1$) $\neq S_2$ pour tout élément grt[i($\ell$),j] de la liste de révocation ($RL_j$) applicable à la période d'index j.

**14.** Unité cryptographique, utilisant un schéma cryptographique en référence à des groupes cycliques $G_1$, $G_2$ et $G_T$ d'ordre p, à deux éléments générateurs respectifs $g_1$ et $g_2$ des groupes $G_1$ et $G_2$ et à une application bilinéaire e(., .) de $G_1 \times G_2$ dans $G_T$, où p désigne un nombre premier, le temps étant subdivisé en périodes successives d'index j = 0, 1, 2, etc.,

dans lequel une clé publique ($gpk_j$) a des composantes représentatives d'éléments u et v du groupe $G_1$ et, pour chaque période d'index j, des composantes représentatives d'un entier $S_j$ compris entre 0 et p-1, d'un élément $g_{1,j}$ du groupe $G_1$ et d'éléments $g_{2,j}$, $w_j$ et $h_j$ du groupe $G_2$,

dans lequel une clé secrète inclut un entier ok compris entre 0 et p-1 tel que $v = u^{ok}$,

dans lequel une clé privée (gsk[i, j]) d'un membre d'un groupe de signataires (2) a une composante représentative d'un entier $x_i$ compris entre 0 et p-1 et, pour chaque période d'index j, une composante représentative d'un élément $A_{i,j}$ du groupe $G_1$ tel que $A_{i,n} = [A_{i,n-1} / g_{1,n-1}]^{1/(x_i - s_n)}$ pour tout index n compris entre 1 et j, ledit membre du groupe de signataires étant capable de générer une signature ($\sigma$) d'un message (M) au cours d'une période d'index $j \geq 0$, la signature ($\sigma$) incluant des éléments $T_1 = u^\alpha$ et $T_2 = A_{i,j} \cdot v^\alpha$ du groupe $G_1$, un élément $S_1 = g_{2,j}{}^\beta$ du groupe $G_2$, un élément $S_2 = e(A_{i,j}, h_j)^\beta$ du groupe $G_T$ et des données de preuve ($\Phi$) dépendant du message (M) et justifiant que les éléments $T_1$, $T_2$, $S_1$ et $S_2$ ont bien été formés avec la connaissance de la clé privée (gsk[i, j]) dudit membre pour la période d'index j, $\alpha$ et $\beta$ étant deux entiers choisis par ledit membre entre 0 et p-1,

l'unité cryptographique comprenant un serveur (6) de levée d'anonymat à l'aide de ladite clé secrète, pour recevoir une signature ($\sigma$) d'un message (M), incluant des éléments $T_1$, $T_2$ du groupe $G_1$, et produire l'élément $A = T_2 \cdot T_1{}^{-ok}$ du groupe $G_1$.

**15.** Programme d'ordinateur pour un dispositif cryptographique ($2_i$) utilisé par un membre du groupe de signataires (2), le programme comprenant des instructions pour exécuter les étapes de la procédure de signature d'un procédé cryptographique selon l'une quelconque des revendications 1 à 5 lors d'une exécution du programme par une unité de traitement du dispositif cryptographique.

**16.** Programme d'ordinateur pour une unité cryptographique (3) utilisée par une autorité de révocation de membres d'un groupe de signataires (2), le programme comprenant des instructions pour exécuter les étapes de la procédure de révocation d'un procédé cryptographique selon la revendication 6 lors d'une exécution du programme par une unité de traitement de l'unité cryptographique.

**17.** Programme d'ordinateur pour une unité cryptographique (4) utilisée par une autorité de changement de liste de révocation de membres d'un groupe de signataires (2), le programme comprenant des instructions pour exécuter les étapes de la procédure de changement de liste de révocation d'un procédé cryptographique selon la revendication 7 lors d'une exécution du programme par une unité de traitement de l'unité cryptographique.

18. Programme d'ordinateur pour un dispositif de vérification de signatures (5), le programme comprenant des instructions pour exécuter les étapes de la procédure de vérification de signature d'un procédé cryptographique selon la revendication 8 lors d'une exécution du programme par une unité de traitement du dispositif de vérification.

19. Programme d'ordinateur pour une unité cryptographique utilisée par une autorité (6) de levée d'anonymat du signataire d'un message (M), le programme comprenant des instructions pour exécuter les étapes de la procédure de levée d'anonymat d'un procédé cryptographique selon la revendication 9 lors d'une exécution du programme par une unité de traitement de l'unité cryptographique.

**Patentansprüche**

1. Kryptografisches Verfahren unter Verwendung eines kryptografischen Schemas in Bezug auf zyklische Gruppen $G_1$, $G_2$ und $G_T$ der Ordnung p mit zwei jeweiligen Erzeugerelementen $g_1$ und $g_2$ der Gruppen $G_1$ und $G_2$ und einer bilinearen Anwendung e(.,.) von $G_1 \times G_2$ in $G_T$, wobei p eine Primzahl bezeichnet, wobei die Zeit in aufeinanderfolgende Zeiträume des Index j = 0, 1, 2, usw. unterteilt ist,

wobei ein öffentlicher Schlüssel ($gpk_j$) Komponenten, die Elemente u und v der Gruppe $G_1$ darstellen, und für jeden Zeitraum des Index j Komponenten, die eine Ganzzahl $S_j$ zwischen 0 und p - 1, ein Element $g_{1,j}$ der Gruppe $G_1$ und Elemente $g_{2,j}$, $w_j$ und $h_j$ der Gruppe $G_2$ darstellen, aufweist,

wobei ein erster geheimer Schlüssel eine Ganzzahl $\gamma$ zwischen 0 und p - 1 enthält, derart, dass $w_j = g_{2,j}^{\gamma}$, $g_{1,0} = g_1^{1/(\gamma+s_0)}$, $g_{2,0} = g_2^{1/(\gamma+s_0)}$ und für j > 0 $g_{i,j} = g_{1,j-1}^{1/(\gamma+s_j)}$ und $g_{2,j} = g_{2,j-1}^{1/(\gamma+s_j)}$,

wobei ein zweiter geheimer Schlüssel eine Ganzzahl ok zwischen 0 und p - 1 enthält, derart, dass $v = u^{ok}$,

wobei ein dritter geheimer Schlüssel eine Ganzzahl tk zwischen 0 und p - 1 enthält, derart, dass $h_j = g_{2,j}^{tk}$,

wobei ein privater Schlüssel (gsk[i,j]) eines Mitglieds einer Gruppe (2) von Unterzeichnenden eine Komponente, die eine Ganzzahl $x_i$ zwischen 0 und p - 1 darstellt, und für jeden Zeitraum des Index j eine Komponente, die ein Element $A_{i,j}$ der Gruppe $G_1$ darstellt, derart, dass $A_{i,n} = [A_{i,n-1}/g_{1,n-1}]^{1/(x_i - s_n)}$ für alle Indizes n zwischen 1 und j, aufweist,

wobei das kryptografische Verfahren ein Unterschriftsverfahren umfasst, bei dem das Mitglied der Gruppe der Unterzeichnenden eine Unterschrift ($\sigma$) einer Nachricht (M) während eines Zeitraums des Index $j \geq 0$ erhält, indem die folgenden Schritte ausgeführt werden:

• Wählen von zwei Ganzzahlen $\alpha$ und $\beta$ zwischen 0 und p - 1;
• Berechnen der Elemente $T_1 = u^{\alpha}$ und $T_2 = A_{i,j} \cdot v^{\alpha}$ der Gruppe $G_1$;
• Berechnen des Elements $S_1 = g_{2,j}^{\beta}$ der Gruppe $G_2$;
• Berechnen des Elements $S_2 = e(A_{i,j}, h_j)^{\beta}$ der Gruppe $G_T$;
• Berechnen von Nachweisdaten ($\Phi$)entsprechend der Nachricht (M), die nachweisen, dass die Elemente $T_1$, $T_2$, $S_1$ und $S_2$ mit der Kenntnis des privaten Schlüssels (gsk[i,j]) des Mitglieds der Gruppe der Unterzeichnenden für den Zeitraum des Index j korrekt gebildet sind; und
• Einschließen der Elemente $T_1$, $T_2$, $S_1$, $S_2$ und der Nachweisdaten ($\Phi$) in die Unterschrift ($\sigma$) der Nachricht (M) .

2. Kryptografisches Verfahren nach Anspruch 1, wobei das Element $A_{i,0}$ des privaten Schlüssels des Mitglieds für den Zeitraum des Index j = 0 gleich $g_1^{1/(\gamma+x_i)}$ ist.

3. Kryptografisches Verfahren nach Anspruch 2, wobei die Nachweisdaten ($\Phi$) einen Nachweis der Kenntnis ohne Veröffentlichung der Kenntnis des Fünffach-Tupels ($x_i,z,\alpha,\beta,\delta$) mit $z = x_i \cdot \alpha$ und $\delta = \alpha \cdot \beta$ umfassen, derart, dass:

• $T_1 = u^{\alpha}$;
• $e(T_2,g_{2,j})^{x_i} \cdot e(v,w_j)^{-\alpha} \cdot e(v,g_{2,j})^{-z} = e(g_{1,j},g_{2,j})/e(T_2,w_j)$;
• $T_1^{\beta} = u^{\delta}$;
• $S_1 = g_{2,j}^{\beta}$; und
• $e(T_2,h_j)^{\beta} = S_2 \cdot e(v,h_j)^{\delta}$.

4. Kryptografisches Verfahren nach Anspruch 1, das ferner eine Prozedur zur Registrierung von Mitgliedern, bei der eine Überwachungsautorität (1) den ersten geheimen Schlüssel ($\gamma$) besitzt, umfasst, wobei der private Schlüssel (gsk[i,j]) eines Mitglieds einer Gruppe (2) von Unterzeichnenden ferner eine Komponente aufweist, die eine weitere Ganzzahl $y_i$ zwischen 0 und p - 1 darstellt,

wobei die Registrierung des Mitglieds der Gruppe (2) der Unterzeichnenden Folgendes umfasst:

- die Auswahl der Ganzzahl $y_i$ zwischen 0 und p - 1 durch das Mitglied;
- die Berechnung eines Elements $t_i = v^{x_i}$ der Gruppe $G_1$ durch das Mitglied;
- die Übertragung des Elements $t_i$ des Mitglieds an die Überwachungsautorität (1);
- die Auswahl der Ganzzahl $x_i$ zwischen 0 und p - 1 durch die Überwachungsautorität;
- die Berechnung des Elements $A_{i,0} = (g_1 \cdot t_i)^{1/(\gamma+x_i)}$ der Gruppe $G_1$ durch die Überwachungsautorität; und
- die Übertragung der Ganzzahl $x_i$ und des Elements $A_{i,0}$ durch die Überwachungsautorität an das Mitglied.

5. Kryptografisches Verfahren nach Anspruch 4, wobei die Nachweisdaten ($\Phi$) einen Nachweis der Kenntnis ohne Veröffentlichung der Kenntnis des Sechsfach-Tupels $(x_i, y_i, z, \alpha, \beta, \delta)$ mit $z = x_i \cdot \alpha$ und $\delta = \alpha \cdot \beta$ umfassen, derart, dass:

- $T_1 = u^\alpha$;
- $e(T_2, g_{2,j})^{x_i} \cdot e(v, w_j)^{-\alpha-y_i} \cdot e(v, g_{2,j})^{-z} = e(g_{1,j} g_{2,j})/e(T_2, w_j)$;
- $T_1^\beta = u^\delta$;
- $S_1 = g_{2,j}^\beta$; und
- $e(T_2, h_j)^\beta = S_2 \cdot e(v, h_j)^\delta$.

6. Kryptografisches Verfahren nach einem der vorhergehenden Ansprüche, das ferner eine Prozedur zum Widerrufen von Mitgliedern der Gruppe (2) der Unterzeichnenden durch eine Autorität (3), die den dritten geheimen Schlüssel (tk) besitzt und eine Widerrufsliste aktuell hält, die für den aktuellen Zeitraum gültig ist und nach dem Widerrufen von k - 1 Mitgliedern der Gruppe der Unterzeichnenden k - 1 Elemente der Gruppe $G_1$ enthält, wobei k eine Ganzzahl mindestens gleich 1 ist, umfasst,
wobei der Widerruf eines k-ten Mitglieds der Gruppe der Unterzeichnenden, dessen privater Schlüssel (gsk[i(k),j']) ein Element $A_{i(k),j'}$ der Gruppe $G_1$ für den Zeitraum des Index j' enthält, während eines Zeitraums des Index j' den Zusatz eines Elements grt[i(k),j'] = $A_{i(k),j'}^{tk}$ der Gruppe $G_1$ zur Widerrufsliste ($RL_{j'}$), die für den Zeitraum des Index j' gültig ist, umfasst.

7. Kryptografisches Verfahren nach Anspruch 6, das ferner eine Prozedur zur Änderung der Widerrufsliste durch eine Autorität (4), die den ersten geheimen Schlüssel ($\gamma$) besitzt, bei jeder Änderung des Zeitraums der Zeitunterteilung umfasst,
wobei die Änderung der Widerrufsliste während des Verstreichens von einem Zeitraum des Index j" - 1 bis zum folgenden Zeitraum des Index j" für eine Ganzzahl j" $\geq$ 1 für alle Elemente grt[i($\ell$),j" - 1] der Gruppe $G_1$, die in der Widerrufsliste ($RL_{j"}$ - 1) erscheinen, die für den Zeitraum des Indes j" - 1 gültig ist, das Einschließen des Elements grt[i($\ell$),j"] = grt[i($\ell$),j" - 1]$^{1/(\gamma+s_{j"})}$ der Gruppe $G_1$ in die Widerrufsliste ($RL_{j"}$), die für den folgenden Zeitraum des Index j" gültig ist, umfasst.

8. Kryptografisches Verfahren nach Anspruch 7, das ferner eine Prozedur zur Verifikation der Unterschrift durch eine Einheit, die den öffentlichen Schlüssel ($gpk_j$) besitzt, unter Beachtung der Widerrufsliste, die für einen Unterschriftszeitraum gültig ist, umfasst,
wobei die Verifikation einer Unterschrift ($\sigma$), die Elemente $T_1$, $T_2$ der Gruppe $G_1$ und $S_1$, $S_2$ der Gruppe $G_2$ und Nachweisdaten ($\Phi$) enthält, die an eine Nachricht (M) angehängt ist und vermutlich während eines Zeitraums des Index j erhalten wurde, unter Beachtung der Widerrufsliste ($RL_j$), die für den Zeitraum des Index j gültig ist, die folgenden Schritte umfasst:

- Bestimmen, dass die Unterschrift ($\sigma$) durch ein Mitglied der Gruppe (2) der Unterzeichnenden bereitgestellt wurde, wenn die Nachweisdaten ($\Phi$) nachweisen, dass die Elemente $T_1$, $T_2$, $S_1$ und $S_2$ entsprechend der Nachricht (M) mit der Kenntnis eines privaten Schlüssels (gsk[i,j]), der für den Zeitraum des Index j gültig ist, korrekt gebildet sind; und
- Annehmen der Unterschrift ($\sigma$) als durch ein Mitglied bereitgestellt, das nicht aus der Gruppe der Unterzeichnenden widerrufen wurde, wenn $e(grt[i(\ell),j],S_1) \neq S_2$ für alle Elemente grt[i($\ell$),j] der Widerrufsliste ($RL_j$), die für den Zeitraum des Index j gültig ist.

9. Kryptografisches Verfahren nach einem der vorhergehenden Ansprüche, das ferner eine Prozedur zur Aufhebung der Anonymität der Unterschrift einer Nachricht (M) durch eine Autorität (6), die den zweiten geheimen Schlüssel (ok) besitzt, umfasst,
wobei die Aufhebung der Anonymität einer Unterschrift ($\sigma$) der Nachricht (M), die Elemente $T_1$, $T_2$ der Gruppe $G_1$ enthält, die Berechnung des Elements $A = T_2 \cdot T_1^{-ok}$ der Gruppe $G_1$ umfasst.

**10.** Kryptografische Vorrichtung unter Verwendung eines kryptografischen Schemas in Bezug auf zyklische Gruppen $G_1$, $G_2$ und $G_T$ der Ordnung p mit zwei jeweiligen Erzeugerelementen $g_1$ und $g_2$ der Gruppen $G_1$ und $G_2$ und mit einer bilinearen Anwendung e(.,.) von $G_1 \times G_2$ in $G_T$, wobei p eine Primzahl bezeichnet, wobei die Zeit in aufeinanderfolgende Zeiträume des Index j = 0,1,2, usw. unterteilt ist,

wobei ein öffentlicher Schlüssel (gpk$_j$) Komponenten, die Elemente u und v der Gruppe $G_1$ darstellen, und für jeden Zeitraum des Index j Komponenten, die eine Ganzzahl $S_j$ zwischen 0 und p - 1, ein Element $g_{1,j}$ der Gruppe $G_1$ und Elemente $g_{2,j}$, $w_j$ und $h_j$ der Gruppe $G_2$ darstellen, aufweist,

wobei ein privater Schlüssel (gsk[i,j]) eines Mitglieds einer Gruppe (2) von Unterzeichnenden, das im Besitz der kryptografischen Vorrichtung ist, eine Komponente, die eine Ganzzahl $x_i$ zwischen 0 und p - 1 darstellt, und für jeden Zeitraum des Index j eine Komponente, die ein Element $A_{i,j}$ der Gruppe $G_1$ darstellt, derart, dass $A_{i,n} = [A_{i,n-1}/g_{1,n-1}]^{1/(x_i - s_n)}$ für alle Indizes n zwischen 1 und j, aufweist,

wobei die kryptografische Vorrichtung ($2_i$) eine Berechnungseinrichtung (25) zum Erhalten einer Unterschrift ($\sigma$) einer Nachricht (M) während eines Zeitraums des Index j ≥ 0 umfasst, indem zwei Ganzzahlen $\alpha$ und $\beta$ zwischen 0 und p - 1 gewählt werden, die Elemente $T_1 = u^\alpha$ und $T_2 = A_{i,j} \cdot v^\alpha$ der Gruppe $G_1$, das Element $S_1 = g_{2,j}{}^\beta$ der Gruppe $G_2$, das Element $S_2 = e(A_{i,j},h_j)^\beta$ der Gruppe $G_T$ und Nachweisdaten ($\Phi$) entsprechend der Nachricht (M), die nachweisen, dass die Elemente $T_1$, $T_2$, $S_1$ und $S_2$ mit der Kenntnis des privaten Schlüssels (gsk[i,j]) des Mitglieds der Gruppe der Unterzeichnenden für den Zeitraum des Index j korrekt gebildet sind, berechnet werden,

wobei die Unterschrift ($\sigma$) der Nachricht (M) die Elemente $T_1$, $T_2$, $S_1$, $S_2$ und die Nachweisdaten ($\Phi$) enthält.

**11.** Kryptografische Einheit unter Verwendung eines kryptografischen Schemas in Bezug auf zyklische Gruppen $G_1$, $G_2$ und $G_T$ der Ordnung p mit zwei jeweiligen Erzeugerelementen $g_1$ und $g_2$ der Gruppen $G_1$ und $G_2$ und mit einer bilinearen Anwendung e(.,.) von $G_1 \times G_2$ in $G_T$, wobei p eine Primzahl bezeichnet, wobei die Zeit in aufeinanderfolgende Zeiträume des Index j = 0,1,2, usw. unterteilt ist,

wobei ein öffentlicher Schlüssel (gpk$_j$) Komponenten, die Elemente u und v der Gruppe $G_1$ darstellen, und für jeden Zeitraum des Index j Komponenten, die eine Ganzzahl $S_j$ zwischen 0 und p - 1, ein Element $g_{1,j}$ der Gruppe $G_1$ und Elemente $g_{2,j}$, $w_j$ und $h_j$ der Gruppe $G_2$ darstellen, aufweist,

wobei ein geheimer Schlüssel eine Ganzzahl tk zwischen 0 und p - 1 enthält, derart, dass $h_j = g_{2,j}{}^{tk}$,

wobei ein privater Schlüssel (gsk[i,j]) eines Mitglieds einer Gruppe (2) von Unterzeichnenden eine Komponente, die eine Ganzzahl $x_i$ zwischen 0 und p - 1 darstellt, und für jeden Zeitraum des Index j eine Komponente, die ein Element $A_{i,j}$ der Gruppe $G_1$ darstellt, derart, dass $A_{i,n} = [A_{i,n-1}/g_{1,n-1}]^{1/(x_i - s_n)}$ für alle Indizes n zwischen 1 und j, aufweist, wobei das Mitglied der Gruppe der Unterzeichnenden während eines Zeitraums des Index j ≥ 0 eine Unterschrift ($\sigma$) einer Nachricht (M) erzeugen kann, wobei die Unterschrift ($\sigma$) Elemente $T_1 = u^\alpha$ und $T_2 = A_{i,j} \cdot v^\alpha$ der Gruppe $G_1$, ein Element $S_1 = g_{2,j}{}^\beta$ der Gruppe $G_2$, ein Element $S_2 = e(A_{i,j},h_j)^\beta$ der Gruppe $G_T$ und Nachweisdaten ($\Phi$), die von der Nachricht (M) abhängen und nachweisen, dass die Elemente $T_1$, $T_2$, $S_1$ und $S_2$ mit der Kenntnis des privaten Schlüssels (gsk[i,j]) des Mitglieds für den Zeitraum des Index j korrekt gebildet worden sind, enthält, wobei $\alpha$ und $\beta$ zwei Ganzzahlen sind, die durch das Mitglied zwischen 0 und p - 1 gewählt werden,

wobei die kryptografische Einheit eine Widerrufsverwaltungseinrichtung (3) zum aktuell Halten einer Widerrufsliste, die für den aktuellen Zeitraum gültig ist, mit Hilfe des geheimen Schlüssels umfasst, wobei die Widerrufsverwaltungseinrichtung (3) eine Berechnungseinrichtung (30) zum Empfangen einer Widerrufsliste (RL$_{j'}$) während eines Zeitraums des Index j', die k - 1 ≥ 0 Elemente der Gruppe $G_1$ und eine Widerrufsanforderung für ein k-tes Mitglied der Gruppe der Unterzeichnenden, dessen privater Schlüssel (gsk[i(k),j'] ein Element $A_{i(k),j'}$ der Gruppe $G_1$ für den Zeitraum des Index j' enthält, wobei k eine Ganzzahl mindestens gleich 1 ist, enthält, und zum Erzeugen einer aktualisierten Widerrufsliste (RL$_{j'}$), die für den Zeitraum des Index j' gültig ist, wobei das Element grt[i(k),j'] = $A_{i(k),j'}{}^{tk}$ zur Gruppe $G_1$ hinzugefügt worden ist, umfasst.

**12.** Kryptografische Einheit unter Verwendung eines kryptografischen Schemas in Bezug auf zyklische Gruppen $G_1$, $G_2$ und $G_T$ der Ordnung p mit zwei jeweiligen Erzeugerelementen $g_1$ und $g_2$ der Gruppen $G_1$ und $G_2$ und mit einer bilinearen Anwendung e(.,.) von $G_1 \times G_2$ in $G_T$, wobei p eine Primzahl bezeichnet, wobei die Zeit in aufeinanderfolgende Zeiträume des Index j = 0,1,2, usw. unterteilt ist,

wobei ein öffentlicher Schlüssel (gpk$_j$) Komponenten, die Elemente u und v der Gruppe $G_1$ darstellen, und für jeden Zeitraum des Index j Komponenten, die eine Ganzzahl $S_j$ zwischen 0 und p - 1, ein Element $g_{1,j}$ der Gruppe $G_1$ und Elemente $g_{2,j}$, $w_j$ und $h_j$ der Gruppe $G_2$ darstellen, aufweist,

wobei ein geheimer Schlüssel eine Ganzzahl $\gamma$ zwischen 0 und p - 1 enthält, derart, dass $w_j = g_{2,j}{}^\gamma$, $g_{1,0} = g_1{}^{1/(\gamma + s_0)}$, $g_{2,0} = g_2{}^{1/(\gamma + s_0)}$ und für j > 0 $g_{1,j} = g_{1,j-1}{}^{1/(\gamma + s_j)}$ und $g_{2,j} = g_{2,j-1}{}^{1/(\gamma + s_j)}$,

wobei ein privater Schlüssel (gsk[i,j]) eines Mitglieds einer Gruppe (2) von Unterzeichnenden eine Komponente, die eine Ganzzahl $x_i$ zwischen 0 und p - 1 darstellt, und für jeden Zeitraum des Index j eine Komponente, die ein Element $A_{i,j}$ der Gruppe $G_1$ darstellt, derart, dass $A_{i,n} = [A_{i,n-1}/g_{1,n-1}]^{1/(x_i - s_n)}$ für alle Indizes n zwischen 1 und j, aufweist, wobei das Mitglied der Gruppe der Unterzeichnenden während eines Zeitraums des Index j ≥ 0 eine

Unterschrift ($\sigma$) einer Nachricht (M) erzeugen kann, wobei die Unterschrift ($\sigma$) Elemente $T_1 = u^\alpha$ und $T_2 = A_{i,j} \cdot v^\alpha$ der Gruppe $G_1$, ein Element $S_1 = g_{2,j}{}^\beta$ der Gruppe $G_2$, ein Element $S_2 = e(A_{i,j}, h_j)^\beta$ der Gruppe $G_T$ und Nachweisdaten ($\Phi$), die von der Nachricht (M) abhängen und nachweisen, dass die Elemente $T_1$, $T_2$, $S_1$ und $S_2$ mit der Kenntnis des privaten Schlüssels (gsk[i,j]) des Mitglieds für den Zeitraum des Index j korrekt gebildet worden sind, enthält, wobei $\alpha$ und $\beta$ zwei Ganzzahlen sind, die durch das Mitglied zwischen 0 und p - 1 gewählt werden,

wobei die kryptografische Einheit eine Verwaltungseinrichtung (4) für eine Widerrufsliste zum Bilden einer Widerrufsliste ($RL_{j''}$), die in einem neuen Zeitraum des Index j" gültig ist, mit Hilfe des geheimen Schlüssels und auf der Grundlage einer Widerrufsliste ($RL_{j''-1}$), die für den vorhergehenden Zeitraum des Index j" - 1 gültig ist, umfasst, wobei j" eine Ganzzahl mindestens gleich 1 ist, wobei die Widerrufsliste, die für den neuen Zeitraum des Index j" gültig ist, ein jeweiliges Element $grt[i[\ell],j''] = grt[i[\ell],j'' - 1]^{1/(\gamma + s_{j''})}$ der Gruppe $G_1$ für alle Elemente $grt[i[\ell],j'']$ der Gruppe $G_1$, die in der Widerrufsliste ($RL_{j''-1}$) erscheinen, die für den vorhergehenden Zeitraum des Index j"- 1 gültig ist, umfasst.

13. Vorrichtung zur Verifikation von Unterschriften, die unter Verwendung eines kryptografischen Schemas in Bezug auf zyklische Gruppen $G_1$, $G_2$ und $G_T$ der Ordnung p mit zwei jeweiligen Erzeugerelementen $g_1$ und $g_2$ der Gruppen $G_1$ und $G_2$ und mit einer bilinearen Anwendung $e(.,.)$ von $G_1 \times G_2$ in $G_T$ erzeugt werden, wobei p eine Primzahl bezeichnet, wobei die Zeit in aufeinanderfolgende Zeiträume des Index j = 0,1,2, usw. unterteilt ist,

wobei ein öffentlicher Schlüssel ($gpk_j$) Komponenten, die Elemente u und v der Gruppe $G_1$ darstellen, und für jeden Zeitraum des Index j Komponenten, die eine Ganzzahl $S_j$ zwischen 0 und p - 1, ein Element $g_{1,j}$ der Gruppe $G_1$ und Elemente $g_{2,j}$, $w_j$ und $h_j$ der Gruppe $G_2$ darstellen, aufweist,

wobei ein privater Schlüssel (gsk[i,j]) eines Mitglieds einer Gruppe (2) von Unterzeichnenden eine Komponente, die eine Ganzzahl $x_i$ zwischen 0 und p - 1 darstellt, und für jeden Zeitraum des Index j eine Komponente, die ein Element $A_{i,j}$ der Gruppe $G_1$ darstellt, derart, dass $A_{i,n} = [A_{i,n-1}/g_{1,n-1}]^{1/(x_i - s_n)}$ für alle Indizes n zwischen 1 und j, aufweist, wobei das Mitglied der Gruppe der Unterzeichnenden während eines Zeitraums des Index j $\geq$ 0 eine Unterschrift ($\sigma$) einer Nachricht (M) erzeugen kann, wobei die Unterschrift ($\sigma$) Elemente $T_1 = u^\alpha$ und $T_2 = A_{i,j} \cdot v^\alpha$ der Gruppe $G_1$, ein Element $S_1 = g_{2,j}{}^\beta$ der Gruppe $G_2$, ein Element $S_2 = e(A_{i,j}, h_j)^\beta$ der Gruppe $G_T$ und Nachweisdaten ($\Phi$), die von der Nachricht (M) abhängen und nachweisen, dass die Elemente $T_1$, $T_2$, $S_1$ und $S_2$ mit der Kenntnis des privaten Schlüssels (gsk[i,j]) des Mitglieds für den Zeitraum des Index j korrekt gebildet worden sind, enthält, wobei $\alpha$ und $\beta$ zwei Ganzzahlen sind, die durch das Mitglied zwischen 0 und p - 1 gewählt werden,

wobei die Verifikationsvorrichtung (5) Zugriff auf den öffentlichen Schlüssel ($gpk_j$) für einen Zeitraum des Index j sowie auf eine Widerrufsliste ($RL_j$), die für den Zeitraum des Index j gültig ist und aus k Elementen $grt[i[\ell],j]$ der Gruppe $G_1$ besteht, wobei k eine positive Ganzzahl oder null ist, besitzt,

wobei die Verifikationsvorrichtung (5) eine Berechnungseinrichtung (50) zum Empfangen einer Unterschrift ($\sigma$), die Elemente $T_1$, $T_2$ der Gruppe $G_1$ und $S_1$, $S_2$ der Gruppe $G_2$ und Nachweisdaten ($\Phi$) enthält, die an eine Nachricht (M) angehängt ist und vermutlich während eines Zeitraums des Index j erhalten wurde, zum Bestimmen, dass die Unterschrift ($\sigma$) durch ein Mitglied der Gruppe der Unterzeichnenden bereitgestellt wurde, wenn die Nachweisdaten ($\Phi$) nachweisen, dass die Elemente $T_1$, $T_2$, $S_1$ und $S_2$ entsprechend der Nachricht (M) mit der Kenntnis eines privaten Schlüssels (gsk[i,j]), der für den Zeitraum des Index j gültig ist, korrekt gebildet sind, und zum Annehmen der Unterschrift ($\sigma$) als durch ein Mitglied bereitgestellt, das nicht aus der Gruppe der Unterzeichnenden widerrufen wurde, wenn $e(grt[i[\ell],j], S_1) \neq S_2$ für alle Elemente $grt[i[\ell],j]$ der Widerrufsliste ($RL_j$), die für den Zeitraum des Index j gültig ist, umfasst.

14. Kryptografische Einheit unter Verwendung eines kryptografischen Schemas in Bezug auf zyklische Gruppen $G_1$, $G_2$ und $G_T$ der Ordnung p mit zwei jeweiligen Erzeugerelementen $g_1$ und $g_2$ der Gruppen $G_1$ und $G_2$ und mit einer bilinearen Anwendung $e(.,.)$ von $G_1 \times G_2$ in $G_T$, wobei p eine Primzahl bezeichnet, wobei die Zeit in aufeinanderfolgende Zeiträume des Index j = 0,1,2, usw. unterteilt ist,

wobei ein öffentlicher Schlüssel ($gpk_j$) Komponenten, die Elemente u und v der Gruppe $G_1$ darstellen, und für jeden Zeitraum des Index j Komponenten, die eine Ganzzahl $S_j$ zwischen 0 und p - 1, ein Element $g_{1,j}$ der Gruppe $G_1$ und Elemente $g_{2,j}$, $w_j$ und $h_j$ der Gruppe $G_2$ darstellen, aufweist,

wobei ein geheimer Schlüssel eine Ganzzahl ok zwischen 0 und p - 1 enthält, derart, dass $v = u^{ok}$,

wobei ein privater Schlüssel (gsk[i,j]) eines Mitglieds einer Gruppe (2) von Unterzeichnenden eine Komponente, die eine Ganzzahl $x_i$ zwischen 0 und p - 1 darstellt, und für jeden Zeitraum des Index j eine Komponente, die ein Element $A_{i,j}$ der Gruppe $G_1$ darstellt, derart, dass $A_{i,n} = [A_{i,n-1}/g_{1,n-1}]^{1/(x_i - s_n)}$ für alle Indizes n zwischen 1 und j, aufweist, wobei das Mitglied der Gruppe der Unterzeichnenden während eines Zeitraums des Index j $\geq$ 0 eine Unterschrift ($\sigma$) einer Nachricht (M) erzeugen kann, wobei die Unterschrift ($\sigma$) Elemente $T_1 = u^\alpha$ und $T_2 = A_{i,j} \cdot v^\alpha$ der Gruppe $G_1$, ein Element $S_1 = g_{2,j}{}^\beta$ der Gruppe $G_2$, ein Element $S_2 = e(A_{i,j}, h_j)^\beta$ der Gruppe $G_T$ und Nachweisdaten ($\Phi$), die von der Nachricht (M) abhängen und nachweisen, dass die Elemente $T_1$, $T_2$, $S_1$ und $S_2$ mit der Kenntnis des privaten Schlüssels (gsk[i,j]) des Mitglieds für den Zeitraum des Index j korrekt gebildet worden sind, enthält, wobei α und β zwei Ganzzahlen sind, die durch das Mitglied zwischen 0 und p - 1 gewählt werden,
wobei die kryptografische Einheit einen Server (6) zur Aufhebung der Anonymität mit Hilfe des geheimen Schlüssels zum Empfangen einer Unterschrift (σ) einer Nachricht (M), die Elemente $T_1$, $T_2$ der Gruppe $G_1$ enthält, und zum Erzeugen des Elements $A = T_2 \cdot T_1^{-ok}$ der Gruppe $G_1$ umfasst.

15. Computerprogramm für eine kryptografische Vorrichtung ($2_i$), das durch ein Mitglied der Gruppe (2) der Unterzeichnenden verwendet wird, wobei das Programm Anweisungen zum Ausführen der Schritte der Unterschriftsprozedur eines kryptografischen Verfahrens nach einem der Ansprüche 1 bis 5 aufgrund einer Ausführung des Programms durch eine Verarbeitungseinheit der kryptografischen Vorrichtung umfasst.

16. Computerprogramm für eine kryptografische Einheit (3), die durch eine Autorität zum Widerrufen von Mitgliedern einer Gruppe (2) von Unterzeichnenden verwendet wird, wobei das Programm Anweisungen zum Ausführen der Schritte der Widerrufsprozedur eines kryptografischen Verfahrens nach Anspruch 6 aufgrund einer Ausführung des Programms durch eine Verarbeitungseinheit der kryptografischen Einheit umfasst.

17. Computerprogramm für eine kryptografische Einheit (4), die durch eine Autorität zur Änderung der Widerrufsliste von Mitgliedern einer Gruppe (2) von Unterzeichnenden verwendet wird, wobei das Programm Anweisungen zum Ausführen der Schritte der Prozedur zur Änderung der Widerrufsliste eines kryptografischen Verfahrens nach Anspruch 7 aufgrund einer Ausführung des Programms durch eine Verarbeitungseinheit der kryptografischen Einheit umfasst.

18. Computerprogramm für eine Vorrichtung (5) zur Verifikation von Unterschriften, wobei das Programm Anweisungen zum Ausführen der Schritte der Prozedur zur Unterschriftsverifikation eines kryptografischen Verfahrens nach Anspruch 8 aufgrund einer Ausführung des Programms durch eine Verarbeitungseinheit der Verifikationsvorrichtung umfasst.

19. Computerprogramm für eine kryptografische Einheit, die durch eine Autorität (6) zur Aufhebung der Anonymität der Unterschrift einer Nachricht (M) verwendet wird, wobei das Programm Anweisungen zum Ausführen der Schritte der Prozedur zur Aufhebung der Anonymität eines kryptografischen Verfahrens nach Anspruch 9 aufgrund einer Ausführung des Programms durch eine Verarbeitungseinheit der kryptografischen Einheit umfasst.

**Claims**

1. Cryptographic method, using a cryptographic scheme based on cyclic groups $G_1$, $G_2$ and $G_T$ of order p, two respective generating elements $g_1$ and $g_2$ of the groups $G_1$ and $G_2$ and a bilinear map e (.,.) of $G_1 \times G_2$ on $G_T$, where p denotes a prime number, time being subdivided into successive periods of index j = 0, 1, 2, etc., wherein a public key ($gpk_j$) has components representative of elements u and v of the group $G_1$ and, for each period of index j, components representative of an integer $S_j$ in the range from 0 to p-1, of an element $g_{1,j}$ of the group $G_1$ and of elements $g_{2,j}$, $w_j$ and $h_j$ of the group $G_2$,
wherein a first secret key includes an integer γ in the range from 0 and p-1 such that $w_j = g_{2,j}^{\gamma}$, $g_{1,0} = g_1^{1/(\gamma+s_0)}$, $g_{2,0} = g_2^{1/(\gamma+s_0)}$ and, for j > 0, $g_{1,j} = g_{1,j-1}^{1/(\gamma+s_j)}$, and $g_{2,j} = g_{2,j-1}^{1(\gamma+s_j)}$,
wherein a second secret key includes an integer ok in the range from 0 to p-1 such that $v = u^{ok}$,
wherein a third secret key includes an integer tk in the range from 0 to p-1 such that $h_j = g_{2,j}^{tk}$,
wherein a private key (gsk[i,j]) of a member of a group of signatories (2) has a component representative of an integer $x_i$ in the range from 0 to p-1 and, for each period of index j, a component representative of an element $A_{i,j}$ of the group $G_1$ such that $A_{i,n} = [A_{i,n-1}/g_{1,n-1}]^{1/(x_i-s_n)}$ for any index n in the range from 1 to j, the cryptographic method comprising a signature procedure in which said member of the group of signatories obtains a signature (σ) for a message (M) during a period of index j ≥ 0, by executing the following steps:

- choosing two integers α and β in the range from 0 to p-1;
- calculating the elements $T_1 = u^{\alpha}$ and $T_2 = A_{i,j} \cdot v^{\alpha}$ of the group $G_1$;
- calculating the element $S_1 = g_{2,j}^{\beta}$ of the group $G_2$;
- calculating the element $S_2 = e(A_{i,j}, h_j)^{\beta}$ of the group $G_T$;
- calculating, on the basis of the message (M), proof data (Φ) confirming that the elements $T_1$, $T_2$, $S_1$ and $S_2$ are correctly formed with knowledge of the private key (gsk[i,j]) of the member of the group of signatories for the period of index j; and
- including the elements $T_1$, $T_2$, $S_1$, $S_2$ and the proof data (Φ) in the signature (σ) of the message (M).

**2.** Cryptographic method according to Claim 1, wherein the element $A_{i,0}$ of the private key of said member during the period of index j = 0 is equal to $g_1^{1/(\gamma+x_i)}$.

**3.** Cryptographic method according to Claim 2, wherein the proof data ($\Phi$) comprise a zero-knowledge proof of knowledge of the quintuplet ($x_i$, z, $\alpha$, $\beta$, $\delta$), where $z = x_i \cdot \alpha$ and $\delta = \alpha \cdot \beta$ such that:

- $T_1 = u^\alpha$;
- $e(T_2, g_{2,j})^{x_i} \cdot e(v, w_j)^{-\alpha} \cdot e(v, g_{2,j})^{-z} = e(g_{1,j}, g_{2,j})/e(T_2, w_j)$;
- $T_1^\beta = u^\delta$;
- $S_1 = g_{2,j}^\beta$; and
- $e(T_2, h_j)^\beta = S_2 \cdot e(v, h_j)^\delta$.

**4.** Cryptographic method according to Claim 1, further comprising a procedure of registering members with a supervisory authority (1) holding the first secret key ($\gamma$),
wherein the private key (gsk[i,j]) of a member of a group of signatories (2) also has a component representative of another integer $y_i$ in the range from 0 to p-1,
wherein the registration of said member of the group of signatories (2) comprises:

- the selection by said member of the integer $y_i$ in the range from 0 to p-1;
- the calculation by said member of an element $t_i = v^{x_i}$ of the group $G_1$;
- the transmission of the element $t_i$ from said member to the supervisory authority (1);
- the selection by the supervisory authority of the integer $x_i$ in the range from 0 to p-1;
- the calculation by the supervisory authority of the element $A_{i,0} = (g_1 \cdot t_i)^{1/(\gamma+x_i)}$ of the group $G_1$; and
- the transmission of the integer $x_i$ and the element $A_{i,0}$ from the supervisory authority to said member.

**5.** Cryptographic method according to Claim 4, wherein the proof data ($\Phi$) comprise a zero-knowledge proof of knowledge of the sextuplet ($x_i$, $y_i$, z, $\alpha$, $\beta$, $\delta$), where $z = x_i \cdot \alpha$ and $\delta = \alpha \cdot \beta$ such that:

- $T_1 = u^\alpha$;
- $e(T_2, g_{2,j})^{x_i} \cdot e(v, w_j)^{-\alpha-y_i} \cdot e(v, g_{2,j})^{-z} = e(g_{1,j}, g_{2,j})/e(T_2, w_j)$;
- $T_1^\beta = u^\delta$;
- $S_1 = g_{2,j}^\beta$; and
- $e(T_2, h_j)^\beta = S_2 \cdot e(v, h_j)^\delta$.

**6.** Cryptographic method according to any of the preceding claims, further comprising a procedure for revoking members of the group of signatories (2) by an authority (3) holding the third secret key (tk) and maintaining an updated revocation list applicable to the current period and comprising k-1 elements of the group $G_1$ after revocation of k-1 members of the group of signatories, k being an integer at least equal to 1, wherein the revocation during a period of index j' of a k-th member of the group of signatories whose private key (gsk[i(k),j']) comprises an element $A_{i(k),j'}$ of the group $G_1$ for the period of index j' comprises the addition of an element $grt[i(k),j'] = A_{i(k)j'}^{tk}$ of the group $G_1$ to the revocation list ($RL_{j'}$) applicable to the period of index j'.

**7.** Cryptographic method according to Claim 6, further comprising a procedure of changing a revocation list by an authority (4) holding the first secret key ($\gamma$) on each change of a period of subdivision of time,
wherein the change of a revocation list during the change from a period of index j"-1 to the next period of index j" for an integer j" $\geq$ 1 comprises, for any element $grt[i(\ell),j"-1]$ of the group $G_1$ belonging to the revocation list ($RL_{j"-1}$) applicable to the period of index j"-1, the inclusion of the element $grt[i(l),j"] = grt(i(\ell),j" - 1)^{1/(\gamma+s_{j'}")}$ of the group $G_1$ in the revocation list ($RL_{j"}$) applicable to the next period of index j".

**8.** Cryptographic method according to Claim 7, further comprising a procedure for verifying a signature by an entity holding the public key (gpk$_j$), taking into account the revocation list applicable to a signature period, wherein the verification of a signature ($\sigma$), including elements $T_1$, $T_2$ of the group $G_1$ and $S_1$, $S_2$ of the group $G_2$ and proof data ($\Phi$), attached to a message (M) and presumed to be obtained during a period of index j, taking into account the revocation list ($RL_j$) applicable to the period of index j, comprises the following steps:

- determining that the signature ($\sigma$) comes from a member of the group of signatories (2) if the proof data ($\Phi$) confirm that the elements $T_1$, $T_2$, $S_1$ and $S_2$ are correctly formed on the basis of the message (M) with knowledge of a private key (gsk[i,j]) valid for the period of index j; and

• accepting the signature ($\sigma$) as coming from a non-revoked member of the group of signatories if e(grt[i($\ell$),j],$S_1$) $\neq S_2$ for any element grt[i($\ell$),j] of the revocation list ($RL_j$) applicable to the period of index j.

9. Cryptographic method according to any of the preceding claims, further comprising a procedure for lifting the anonymity of the signatory of a message (M) by an authority (6) holding the second secret key (ok), wherein the lifting of anonymity on the basis of a signature ($\sigma$) of the message (M), including elements $T_1$, $T_2$ of the group $G_1$, comprises the calculation of the element $A = T_2.T_1^{-ok}$ of the group $G_1$.

10. Cryptographic device, using a cryptographic scheme based on cyclic groups $G_1$, $G_2$ and $G_T$ of order p, two respective generating elements $g_1$ and $g_2$ of the groups $G_1$ and $G_2$, and a bilinear map e(., .) of $G_1 \times G_2$ on $G_T$, where p denotes a prime number, time being subdivided into successive periods of index j = 0, 1, 2, etc., wherein a public key ($gpk_j$) has components representative of elements u and v of the group $G_1$ and, for each period of index j, components representative of an integer $s_j$ in the range from 0 to p-1, of an element $g_{1,j}$ of the group $G_1$ and of elements $g_{2,j}$, $w_j$ and $h_j$ of the group $G_2$,
wherein a private key (gsk[i,j]) of a member of a group of signatories (2) holding said cryptographic device has a component representative of an integer $x_i$ in the range from 0 to p-1 and, for each period of index j, a component representative of an element $A_{i,J}$ of the group $G_1$ such that $A_{i,n} = [A_{i,n}/g_{1,n-1}]^{1/(x_i - s_n)}$ for any index n in the range from 1 to j,
the cryptographic device ($2_i$) comprising a calculator (25) for obtaining a signature ($\sigma$) for a message (M) during a period of index $j \geq 0$, by choosing two integers $\alpha$ and $\beta$ in the range from 0 to p-1, by calculating the elements $T_1 = u^\alpha$ and $T_2 = A_{i,j}.v^\alpha$ of the group $G_1$, the element $S_1 = g_{2,j}^\beta$ of the group $G_2$, the element $S_2 = e(A_{i,j}, h_j)^\beta$ of the group $G_T$ and, on the basis of the message (M), proof data ($\Phi$) confirming that the elements $T_1$, $T_2$, $S_1$ and $S_2$ are correctly formed with the knowledge of the private key (gsk[i,j]) of the member of the group of signatories for the period of index j, the signature ($\sigma$) of the message (M) including the elements $T_1$, $T_2$, $S_1$, $S_2$ and the proof data ($\Phi$).

11. Cryptographic unit, using a cryptographic scheme based on cyclic groups $G_1$, $G_2$ and $G_T$ of order p, two respective generating elements $g_1$ and $g_2$ of the groups $G_1$ and $G_2$, and a bilinear map e(., .) of $G_1 \times G_2$ on to $G_T$, where p denotes a prime number, time being subdivided into successive periods of index j = 0, 1, 2, etc., wherein a public key ($gpk_j$) has components representative of elements u and v of the group $G_1$ and, for each period of index j, components representative of an integer $s_j$ in the range from 0 to p-1, of an element $g_{1,j}$ of the group $G_1$ and of elements $g_{2,j}$, $w_j$ and $h_j$ of the group $G_2$,
wherein a secret key includes an integer tk in the range from 0 to p-1 such that $h_j = g_{2,j}^{tk}$,
wherein a private key (gsk[i,j]) of a member of a group of signatories (2) has a component representative of an integer $x_i$ in the range from 0 to p-1 and, for each period of index j, a component representative of an element $A_{i,j}$ of the group $G_1$ such that $A_{i,n} = [A_{i,n-1}/g_{1,n-1}]^{1/(x_i - s_n)}$ for any index n in the range from 1 to j, said member of the group of signatories being capable of generating a signature ($\sigma$) for a message (M) during a period of index $j \geq 0$, the signature ($\sigma$) including elements $T_1 = u^\alpha$ and $T_2 = A_{i,j}.v^\alpha$ of the group $G_1$, an element $S_1 = g_{2,j}^\beta$ of the group $G_2$, an element S2 = $e(A_{i,j}, h_j)^\beta$ of the group $G_T$ and proof data ($\Phi$) dependent on the message (M) and confirming that the elements $T_1$, $T_2$, $S_1$ and $S_2$ have been correctly formed with the knowledge of the private key (gsk[i,j]) of said member for the period of index j, $\alpha$ and $\beta$ being two integers chosen by said member between 0 and p-1,
the cryptographic unit comprising a revocation list manager (3) for maintaining an updated revocation list applicable to the current period using said secret key, the revocation manager (3) comprising a calculator (30) for receiving, during a period of index j', a revocation list ($RL_{j'}$) comprising k-1 $\geq$ 0 elements of the group $G_1$ and a request for revocation of a k-th member of the group of signatories whose private key (gsk[i(k),j']) comprises an element $A_{i(k),j'}$ of the group $G_1$ for the period of index j', k being an integer at least equal to 1, and for producing an updated revocation list ($RL_{j'}$) applicable to the period of index j', to which the element grt[i(k),j'] = $A_{i(k),j}^{tk}$ of the group $G_1$ has been added.

12. Cryptographic unit, using a cryptographic scheme based on cyclic groups $G_1$, $G_2$ and $G_T$ of order p, two respective generating elements $g_1$ and $g_2$ of the groups $G_1$ and $G_2$, and a bilinear map e(., .) of $G_1 \times G_2$ on $G_T$, where p denotes a prime number, time being subdivided into successive periods of index j = 0, 1, 2, etc., wherein a public key ($gpk_j$) has components representative of elements u and v of the group $G_1$ and, for each period of index j, components representative of an integer $s_j$ in the range from 0 to p-1, of an element $g_{1,j}$ of the group $G_1$ and of elements $g_{2,j}$, $w_j$ and $h_j$ of the group $G_2$,
wherein a secret key includes an integer $\gamma$ in the range from 0 to p-1 such that $w_j = g_{2,j}^\gamma$, $g_{1,0} = g_1^{1/(\gamma+s_0)}$, $g_{2,0} = g_2^{1/(\gamma+s_0)}$ and, for j > 0, $g_{1,j} = g_{1,j-1}^{1/(\gamma+s_j)}$, and $g_{2,j} = g_{2,j-1}^{1/(\gamma+s_j)}$,
wherein a private key (gsk[i,j]) of a member of a group of signatories (2) has a component representative of an integer $x_i$ in the range from 0 to p-1 and, for each period of index j, a component representative of an element $A_{i,j}$

of the group $G_1$ such that $A_{i,n} = [A_{i,n-1}/g_{1,n-1}]^{1/(x_i \cdot s_n)}$ for any index n in the range from 1 to j, said member of the group of signatories being capable of generating a signature ($\sigma$) for a message (M) during a period of index $j \geq 0$, the signature ($\sigma$) including elements $T_1 = u^\alpha$ and $T_2 = A_{i,j}.v^\alpha$ of the group $G_1$, an element $S_1 = g_{2,j}^\beta$ of the group $G_2$, an element S2 $= e(A_{i,j}, h_j)^\beta$ of the group $G_T$ and proof data ($\Phi$) dependent on the message (M) and confirming that the elements $T_1$, $T_2$, $S_1$ and $S_2$ have been correctly formed with the knowledge of the private key (gsk[i,j]) of said member for the period of index j, $\alpha$ and $\beta$ being two integers chosen by said member between 0 and p-1,

the cryptographic unit comprising a revocation list manager (4) for forming a revocation list ($RL_{j''}$) applicable to a new period of index j", using said secret key and on the basis of a revocation list ($RL_{j''-1}$) applicable to the preceding period of index j"-1, j" being an integer at least equal to 1, the revocation list applicable to the new period of index j" comprising a respective element grt[i($\ell$), j"] = grt[i($\ell$),j"-1]$^{1/(\gamma+s_{j}'')}$ of the group $G_1$ for any element grt[i($\ell$), j"-1] of the group $G_1$ belonging to the revocation list ($RL_{j''-1}$) applicable to the preceding period of index j"-1.

13. Device for verifying signatures produced by using a cryptographic scheme based on cyclic groups $G_1$, $G_2$ and $G_T$ of order p, two respective generating elements $g_1$ and $g_2$ of the groups $G_1$ and $G_2$, and a bilinear map e(., .) of $G_1 \times G_2$ on $G_T$, where p denotes a prime number, time being subdivided into successive periods of index j = 0, 1, 2, etc., wherein a public key ($gpk_j$) has components representative of elements u and v of the group $G_1$ and, for each period of index j, components representative of an integer $s_j$ in the range from 0 to p-1, of an element $g_{1,j}$ of the group $G_1$ and of elements $g_{2,j}$, $w_j$ and $h_j$ of the group $G_2$,

wherein a private key (gsk[i,j]) of a member of a group of signatories (2) holding said cryptographic device has a component representative of an integer $x_i$ in the range from 0 to p-1 and, for each period of index j, a component representative of an element $A_{i,j}$ of the group $G_1$ such that $A_{i,n} = [A_{i,n-1}/g_{1,n-1}]^{1/(x_i \cdot s_n)}$ for any index n in the range from 1 to j, said member of the group of signatories being capable of generating a signature ($\sigma$) for a message (M) during a period of index $j \geq 0$, the signature ($\sigma$) including elements $T_1 = u^\alpha$ and $T_2 = A_{i,j}.v^\alpha$ of the group $G_1$, an element $S_1 = g_{2,j}^\beta$ of the group $G_2$, an element $S_2 = e(A_{i,j}, h_j)^\beta$ of the group $G_T$ and proof data ($\Phi$) dependent on the message (M) and confirming that the elements $T_1$, $T_2$, $S_1$ and $S_2$ have been correctly formed with the knowledge of the private key (gsk[i,j]) of said member for the period of index j, $\alpha$ and $\beta$ being two integers chosen by said member between 0 and p-1, the verification device (5) having access to the public key ($gpk_j$) for a period of index j and to a revocation list ($RL_j$) applicable the period of index j and composed of k elements grt[i($\ell$), j] of the group $G_1$, k being a positive integer or zero,

the verification device (5) comprising a calculator (50) for receiving a signature ($\sigma$), including elements $T_1$, $T_2$ of the group $G_1$ and $S_1$, $S_2$ of the group $G_2$ and proof data ($\Phi$), attached to a message (M) and presumed to be obtained during a period of index j, for determining that said signature ($\sigma$) comes from a member of the group of signatories if the proof data ($\Phi$) confirm that the elements $T_1$, $T_2$, $S_1$ and $S_2$ are correctly formed on the basis of the message (M) with knowledge of a private key (gsk[i,j]) valid for the period of index j, and for accepting the signature ($\sigma$) as coming from a non-revoked member of the group of signatories if e(grt[i($\ell$),j], $S_1$) + $S_2$ for any element grt[i($\ell$),j] of the revocation list ($RL_j$) applicable to the period of index j.

14. Cryptographic unit, using a cryptographic scheme based on cyclic groups $G_1$, $G_2$ and $G_T$ of order p, two respective generating elements $g_1$ and $g_2$ of the groups $G_1$ and $G_2$, and a bilinear map e(., .) of $G_1 \times G_2$ on $G_T$, where p denotes a prime number, time being subdivided into successive periods of index j = 0, 1, 2, etc., wherein a public key ($gpk_j$) has components representative of elements u and v of the group $G_1$ and, for each period of index j, components representative of an integer $s_j$ in the range from 0 to p-1, of an element $g_{1,j}$ of the group $G_1$ and of elements $g_{2,j}$, $w_j$ and $h_j$ of the group $G_2$,

wherein a secret key includes an integer ok in the range from 0 to p-1 such that $v = u^{ok}$,

wherein a private key (gsk[i,j]) of a member of a group of signatories (2) has a component representative of an integer $x_i$ in the range from 0 to p-1 and, for each period of index j, a component representative of an element $A_{i,J}$ of the group $G_1$ such that $A_{i,n} = [A_{i,n-1}/g_{1,n-1}]^{1/(x_i \cdot s_n)}$ for any index n in the range from 1 to j, said member of the group of signatories being capable of generating a signature ($\sigma$) for a message (M) during a period of index $j \geq 0$, the signature ($\sigma$) including elements $T_1 = u^\alpha$ and $T_2 = A_{i,j}.v^\alpha$ of the group $G_1$, an element $S_1 = g_{2,j}^\beta$ of the group $G_2$, an element $S_2 = e(A_{i,j}, h_j)^\beta$ of the group $G_T$ and proof data ($\Phi$) dependent on the message (M) and confirming that the elements $T_1$, $T_2$, $S_1$ and $S_2$ have been correctly formed with the knowledge of the private key (gsk[i,j]) of said member for the period of index j, $\alpha$ and $\beta$ being two integers chosen by said member between 0 and p-1,

the cryptographic unit comprising a server (6) for lifting anonymity using said secret key, for receiving a signature ($\sigma$) of a message (M), including elements $T_1$, $T_2$ of the group $G_1$, and producing the element $A = T_2.T_1^{-ok}$ of the group $G_1$.

15. Computer program for a cryptographic device ($2_i$) used by a member of the group of signatories (2), the program comprising instructions for executing the steps of the signing procedure of a cryptographic method according to any of Claims 1 to 5 during an execution of the program by a processing unit of the cryptographic device.

16. Computer program for a cryptographic unit (3) used by an authority responsible for revoking members of a group of signatories (2), the program comprising instructions for executing the steps of the revocation procedure of a cryptographic method according to Claim 6 during an execution of the program by a processing unit of the cryptographic device.

17. Computer program for a cryptographic unit (4) used by an authority responsible for changing a revocation list of members of a group of signatories (2), the program comprising instructions for executing the steps of the revocation list changing procedure of a cryptographic method according to Claim 7 during an execution of the program by a processing unit of the cryptographic device.

18. Computer program for a signature verification device (5), the program comprising instructions for executing the steps of the signature verification procedure of a cryptographic method according to Claim 8 during an execution of the program by a processing unit of the cryptographic device.

19. Computer program for a cryptographic unit used by an authority (6) responsible for lifting the anonymity of the signatory of a message (M), the program comprising instructions for executing the steps of the anonymity lifting procedure of a cryptographic method according to Claim 9 during an execution of the program by a processing unit of the cryptographic device.

FIG. 1

**FIG. 2**

**FIG. 3**

FIG. 4

FIG. 5

FIG. 6

**FIG. 7**

**FIG. 8**

**FIG. 9**

②ᵢ                                          ①

$$y_i \xleftarrow{R} \{0,1,...,p\text{-}1\}$$

10

$$t_i \xleftarrow{} v^{y_i}$$

11                $t_i$

12

$$x_i \xleftarrow{R} \{0,1,...,p\text{-}1\}$$

$$A_{i,0} \xleftarrow{R} (g_1 . t_i)^{1/(\gamma+x_i)}$$

13

$(x_i, A_{i,0})$

Stocke $(x_i, y_i, A_{i,0})$        Stocke $(x_i, y_i, A_{i,0})$

14                                          15

# FIG. 10

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- Group Signatures with Verifier-Local Revocation. **BONEH ; SHACHAM.** Proceedings of the 11th ACM Conférence on Computer and Communications Securit. ACM, 2004, 168-177
- **NAKANISHI ; FUNABIKI.** Verifier-Local Revocation Group Signature Schemes with Backward Unlinkability from Bilinear Maps. *IEICE Transactions on Fundamentals of Electronics, Communications and Computer Sciences,* 2007, vol. E90-A (1), 65-74
- **ZHOU ; LIN.** Shorter Verifier-Local Revocation Group Signatures From Bilinear Maps. Lecture Notes in Computer Science, Cryptology and Network Security, 2006, vol. 4301, 126-143
- **M. GIRAULT ; G. POUPARD ; J. STERN.** On the Fly Authentication and Signature Schemes Based on Groups of Unknown Order. *Journal of Cryptology,* 2006, vol. 19, 463-487
- Efficient Identification and Signatures for Smart Cards. **K.P. SCHNORR.** Crypto '89, Vol. 435, Lecture Notes in Computer Science. Springer, 1989, vol. 435, 239-252